**Europäisches Patentamt**

**European Patent Office**

**Office européen des brevets**

(19)

(11) **EP 1 049 352 A2**

(12) **EUROPEAN PATENT APPLICATION**

(43) Date of publication:
**02.11.2000 Bulletin 2000/44**

(51) Int Cl.7: **H04Q 11/04**, H04L 12/56

(21) Application number: **99122862.8**

(22) Date of filing: **17.11.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **09.04.1999 US 128685 P**<br>**30.06.1999 US 342975**<br><br>(71) Applicant: **NEC CORPORATION**<br>**Tokyo (JP)**<br><br>(72) Inventors:<br>• **Goudreau, Mark, c/o NEC U.S.A., Inc.**<br>**Princeton, New Jersey 08540 (US)** | • **Kolliopoulos, Stavros,**<br>**c/o NEC Research Inst.,Inc.**<br>**Princeton, New Jersey 08540 (US)**<br>• **Rao, Satishi, c/o NEC Research Inst.,Inc.**<br>**Princeton, New Jersey 08540 (US)**<br><br>(74) Representative: **Baronetzky, Klaus, Dipl.-Ing.**<br>**Splanemann Reitzner**<br>**Baronetzky Westendorp**<br>**Patentanwälte**<br>**Rumfordstrasse 7**<br>**80469 München (DE)** |

(54) **Shakeup technique to improve scheduling techniques for input-queued switches**

(57) A scheduling method in a switch is disclosed, the switch including input ports (25.11-25.14) and output ports (25.5-25.54), each input port having one queue each for each said output port, thereby each input port having as many queues as a number of said output ports. Each input ports is represented as a node in a first set of vertices of a bipartite graph (23.1) and each said output ports is represented as a node in a second set of vertices of said bipartite graph (23.2). Each non-empty queue between any of said input ports and any of said output pods is represented as an edge between a vertex in said first set corresponding to said any of said input ports and a vertex in said second set corresponding to said any of said output ports, thereby creating a set of edges (23.3). An initial matching is performed by finding a subset of edges such that no vertex is incident to more than one edge in said subset (23.4). An unweighted shakeup matching for a hitherto unmatched vertex x in said first set to a vertex y in the second set is performed by performing an appropriate one of the following two steps, wherein if x matches with more than one of said vertices in the second set, vertex y being selected at random: adding new matching (x,y) if y is not part of any previous matching (23.9); replacing a matching involving y by a matching (x,y) if y is already part of a matching (z,y) wherein z is a vertex in said first set (23.11). A weighted shakeup method also considers the length of each queue.

FIG. 1

BIPARTITE GRAPH

**Description**

The present invention relates to a queuing system with multiple queues requiring multiple services, and more specifically to an improvement of a scheduling technique for input-queued switches. Specifically, the present invention may be embodied in methods using an unweighted and weighted shakeup approach; method for queuing in a switch using an unweighted and a weighted shakeup approach; an unweighted shakeup switch and a weighted shakeup switch; and a network system using a combination of weighted and unweighted shakeup switches.

For a better understanding of the present invention some graph-theoretic terminology is defined herein.

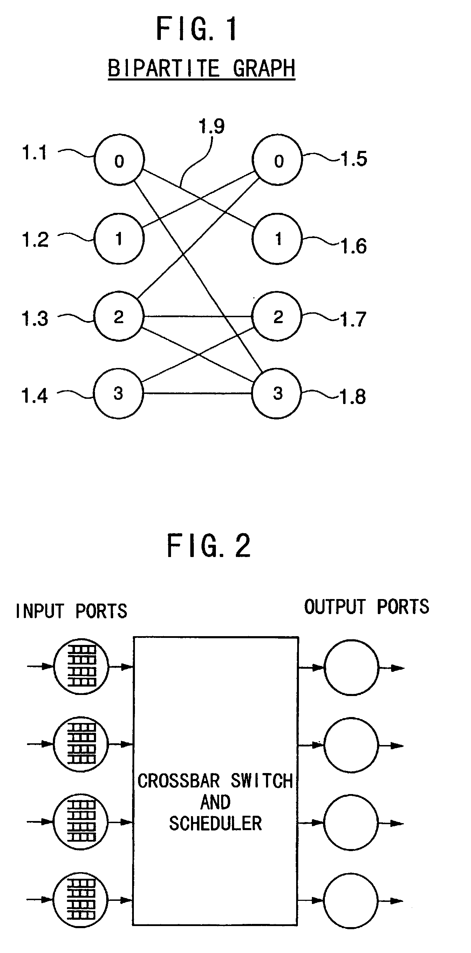

- A *bipartite graph,* as shown in FIG. 1, is an undirected graph for which the vertices can be partitioned into two sets 1.1-1.4 and 1.5-1.8 such that an edge 1.9 is located only between the two sets. A set of queues requiring a set of services can be represented by such a bipartite graph. The existence of an edge between two vertices indicates that an entry in a queue represented by the first vertex requires a service represented by the second vertex.
- A *matching* is a subset of edges such that no vertex is incident to more than one of the edges in the subset. Finding a matching corresponds to the selection of a partial permutation between queues and services requested.
- A *maximum (size)* matching is a matching with the largest possible number of edges. $n$ and $m$ denote the number of vertices and edges respectively in an underlying graph representing the present state. For an N x N system representing $N^2$ queues requiring N services $n = 2N$ and $m < N^2$.
- A maximum *weight matching* is a matching M that maximizes the sum of the weights of the edges in *M.*

An important example of such a queuing system is a router switch used in applications like the Internet. The present application uses a switch as an important example of a queuing system that can be represented using a bipartite graph. It should be noted that the present invention should not be limited to a switch and can be applied to any queuing system that can be represented using a bipartite graph.

The growth of the Internet places continuously increasing demands on routers and switches. Switch designs capable of handling aggregate bandwidths of tens or hundreds of gigabits per second, with commensurate increase in the number of input and output ports are presently available. Examples of such switches are described in N. MeKeown, M. Izzard, A. Mekkittikul, W. Ellersick, and M. Horowitz, "The Tiny Tera: A packet core switch" in *Hot Interconnects IV,* (Stanford University), pp. 161-173, August 1996; and C. Partridge, P. P. Carvey, E. Burgess, I. Castineyra, T. Clarke, L Graham, M. Hathaway, P. Herman, A. King, S. Kohalmi, T. Ma, J. Mcallen, T. Mendez, W. C. Miliiken, R. Pettyjohn, J. Rokosz, J. Seeger, M. Sollins, S. Storch, B. Tober, G. D. Troxel, D. Waitzman, and S. Winterble. "A 50-Gb/s IP router, " *IEEE/ACM Transactions on Networking,* vol. 6, no.3, pp. 237-248, June 1998.

In addition, such queues increasingly face the demands of supporting flows with requested quality-of-service (QoS), which may include bandwidth, latency, and jitter restrictions. Of course, all services must be supported in an efficient way, such that the switch will be able to operate at nearly 100% capacity.

To support these increasing demands, a switch architecture that provides scalable bandwidth as the number of switch ports grows is promising. The examples described in the background section as well as the preferred embodiments described in the present specification assumes that the switching fabric is a crossbar switch that has N input ports and N output ports, N being any natural number. It should be noted that the present invention is not limited to such a switch and can be used for any switch including a switch with M input ports and N output ports, M and N being natural numbers.

A crossbar switch is capable of routing an arbitrary permutation of fixed-sized packets (cells) in one time step. When Karol et al. illustrated the limitations of using a single queue per input port several research groups began to consider the use of N queues per switch-a technique known as virtual output queuing (VOQ). For more details on such limitations, See M. J. Karol, M. G. Hluchyj, and S. P. Morgan, "Input versus output queuing on a space-division packet switch," *IEEE Transactions on Communications,* vol. COM-35, no. 12, pp. 1347-1356, December 1987. For more background information, *see also* M. Karol, K. Bag, and H. Obara, "Improving the performance of input-queued ATM packet-switching," in *Proceedings IEEE INFOCOM'92,* pp. 110-115, 1992 and N. W. McKeown, *Scheduling Algorithms for Input-Queued Cell Switches.* PhD thesis, University of California at Berkeley, 1995.

Intuitively, VOQ allows the switch to have greater flexibility when selecting a permutation. An example of a VOQ switch where N = 4 is shown in FIG. 2. For such VOQ switches, selecting appropriate permutations quickly is a fundamental problem. But what is the most appropriate permutation? One reasonable approach would be to route the most cells possible in the current time step.

The above-mentioned problem is identical to calculating a Maximum Bipartite Matching (MBM), a graph problem that has been studied in some detail (see Section IB.1(a)). However, the scheduling calculations involved in the implementation of conventional methods lead to severe bottleneck. This has led to a number of conventional heuristics that approximate the MBM. These heuristics include Anderson et al.'s PIM, McKeown et al.'s SLIP, and a number of other approaches that greedily find a maximal matching. See T E. Anderson, S. S. Owicki, J. B. Saxe, and C. P. Thacker, "High-speed switch scheduling for local-area networks," *ACM Transactions on Computer Systems,* Vol. 11, no.4, pp. 319-352, November 1993 and N. McKeown, P. Varaiya, and J. Wairand, "Scheduling cells in an input-queued switch, " *Electronic Letters,* vol. 29, no. 25, pp. 2174-2175, December 1993.

A further drawback of MBM demonstrated by McKeown, is that it can be *unstable* even for traffic flows for which no input or output port is expected to handle a throughput greater than its maximum capacity. A queuing method is considered unstable when it can result in unbounded queue lengths. Further information on these drawbacks can be found in N. W. McKeown, *Scheduling Algorithms for Input-Queued Cell Switches.* PhD thesis, University of California at Berkeley, 1995.

A flow is said to be admissible when no input or output port switch is loaded to its full capacity. It was later shown independently by Tassiulas and Ephremides; and McKeown, Anantharam, and Walrand that a generalization of the MBM approach, called Maximum Weight Bipartite Matching (MWBM), would be stable for all admissible flows. See N. McKeown, V. Anantharam, and I. Walrand, "Achieving 100% throughput in an input-queued switch," in *Proceedings IEEE INFOCOM'96,* (San Francisco, CA), pp. 296-302, March 1996. As with MBM, however, implementing full MWBM is problematic. This has resulted in a number of heuristics to approximate a MWBM, for example ILPF. See A. Mekkittikul and N. McKeown, "A practical scheduling algorithm to achieve 100% throughput in input-queued switches" in *Proceedings IEEE INFOCOM'98,* (San Francisco, CA), pp. 792-799, March 1998.

MBM and MWBM approaches may be suitable in different contexts. For best-effort service, where QoS is not considered, the MBM approach is quite reasonable. If there is no call-admission control for flows, then the ability to support all admissible flows will not be a particularly useful feature. In such a case, maximizing instantaneous bandwidth is a more reasonable design goal. On the other hand, if QoS is required and call-admission control is used, an approach like MWBM that is stable for all admissible traffic is highly desirable.

While the techniques of the present invention choose a matching based only on the current state of the input queues, some related work considers the scheduling problem under slightly different assumptions. For example, Kam and Siu and Li and Ansari assume the scheduler has knowledge of flow requirements from the call-admission controller (CAC). See A. C. Kam and K. Y, Siu, "Linear complexity algorithms for bandwidth reservations and delay guarantees in input-queued switches with no speedup," in *Proceedings of the 6th International Conference on Network Protocols,* pp. 2-11, 1998 and S. Li and N. Ansari, "Input-queued switching with QoS guarantees," in *Proceedings IEEE INFOCOM'99,* vol. 3, pp. 1152-1159, March 1999. Other conventional approaches calculate a matching while leveraging off the matching from the previous time step, for example, see A. C. Kam and K. Y, Siu, "Linear complexity algorithms for bandwidth reservations and delay guarantees in input-queued switches with no speedup," in *Proceedings of the 6th International Conference on Network Protocols,* pp. 2-11, 1998 and see L. Tassiulas, "Linear complexity algorithms for maximum throughput in radio networks and input queued switches," in *Proceedings IEEE INFOCOM '98,* vol. 2, pp. 533-539, 1998. The rationale in these cases is that the state of the input queues can only change by a small amount each time step; intuitively, the matching for time step i will very likely be a reasonable matching for time step i + 1 as well.

For a better understanding all scheduling approaches are partitioned into two classes; according to whether they approximate MBM (unweighted) or MWBM (weighted). These two classes are described in Sections IB.1 and IB. 2, respectively.

IB.1 Unweighted Approaches

The unweighted approaches to the scheduling problem do not take into account the size of the different queues, only whether they are empty or not. The switch can be modeled as a bipartite graph, where each input port is represented by a node in one set, each output port is represented by a node in the other set, and the existence of an edge between two vertices indicates that a cell exists to be routed between the corresponding input and output ports in the switch. Finding a matching corresponds to the selection of a permutation to route. In the present specification n and m are used to denote the number of vertices and edges respectively in an underlying graph representing the state of the switch. For an $N \times N$ switch, $n = 2N$ and $m =< N^2$. The representation of the switch as the bipartite graph defined above allows for succinct method descriptions. Almost all conventional scheduling heuristics aim to approximate a maximum or maximum weight (see next section) matching. A related concept is that of a *maximal* matching, to which it is not possible to add an edge while still maintaining a matching. The various conventional heuristic approaches are described hereunder.

IB.1(a) MBM

A maximum bipartite matching approach is the first example of an unweighted approach. Computing an actual maximum size matching is now considered. The fastest method to compute a maximum size matching runs in $O(n^{1/2}m)$ time worst-case. See E. A. Dinitz, "Algorithm for solution of a problem of maximum flow in networks with power estimation," *Soviet Math. Dokl,* vol. 11, pp. 1277-1280,1970 and S. Even and R. E. Tarjan, "Network flow and testing graph connectivity," *SIAM Journal on Computing,* vol. 4. pp. 507-518, 1975.

The MBM approach has several drawbacks. It can lead to instability with an admissible but non-uniform traffic even on a 3 x 3 switch. See N. McKeown, V. Anantharam, and I. Walrand, "Achieving 100% throughput in an input-queued switch," in *Proceedings IEEE INFOCOM'96,* (San Francisco, CA), pp. 296-302, March 1996. Another problem with MBM is that the relevant methods are sequential in nature, requiring a centralized controller with knowledge of the state of each of the $O(n^2)$ queues at each time step.

Because of these problems, several heuristics have been proposed that settle for a bipartite matching that is not maximum, but that can be calculated quickly (often in hardware) on real systems. See S E. Anderson, S. S. Owicki, J. B. Saxe, and C. P. Thacker, "High-speed switch scheduling for local-area networks," *ACM Transactions on Computer Systems,* Vol. 11, no.4, pp. 319-352, November 1993; M. Ali and H. Nguyen, "A neural network implementation of an input access scheme in a high-speed packet switch," in *Proc. of GLOBECOM 1989,* pp. 1192-1196, 1989; T. X. Brown and K. H. Liu, "Neural network design of a Banyan network controller,' *IEEE Journal on Selected Areas of Communication,* vol.8, no.8, pp. 1428-1438. October 1990; N. McKeown, P. Varaiya, and J. Walrand, "Scheduling cells in an input-queued switch," *Electronic Letters,* vol. 29, no. 25, pp. 2174-2175, December 1993 and T. P. Troudet and S. M. Walters, "Neural network architecture for crossbar switch control," *IEEE Transactions on Circuits and Systems,* vol. 38, no. 1, pp. 42-56, January 1991.

IB.1(b) PIM

Parallel Iterative Matching (PIM) is a heuristic, which will converge to a maximal matching in O(log n) iterations on average. See T E. Anderson, S. S. Owicki, J. B. Saxe, and C. P. Thacker, "High-speed switch scheduling for local-area networks," *ACM Transactions on Computer Systems,* Vol. 11, no. 4, pp. 319-352, November 1993. At every iteration unmatched inputs propose to every output for which they have a queued cell. If an unmatched output receives any requests, it grants to one by selecting uniformly at random over all requests. If an input receives more than one grant it randomly selects one among them.

IB.1(c) RND

The RND heuristic is similar to FIM. The difference is that every unmatched input $i$ make only a single request to a randomly chosen output port $j$ for which $i$ has a queued cell.

IB.1(d) RR-RND

In the round-robin method RR-RND, scheduling for a given time slot $t$ is determined by a fixed priority schedule. The input $i_1$ with the highest priority chooses randomly among the outputs for which it has a cell queued. The input $i_2$ with the next highest priority chooses next among the not-taken outputs, and so on. At the next time slot $t + 1$ the input-port priorities will be incremented by 1, modulo N. The advantage of this priority scheme is that it can be easily implemented in hardware with a pipeline mechanism.

IB.1(e) SLIP

SLIP was developed by McKeown and analyzed extensively in N. W. McKeown, "Scheduling Algorithms for Input-Queued Cell Switches", PhD thesis, University of California at Berkeley, 1995. In SLIP, each input port and output port has a distinct priority wheel. An input sends a request to every output for which it has a queued cell. An output $j$ chooses to accept a request from port $i$, based on its priority wheel; if the grant is accepted by $i$, the priority wheel at $j$ will be set to $(i + 1)$ mod $N$. Input ports accept grants based on priority wheels, and advance their wheels in a similar fashion.

The PIM, RND and SLIP heuristics fall into the class of *iterative* heuristics. Iterative heuristics are not guaranteed to find a maximal matching in a single execution (iteration). Therefore repeating them more than once, may increase the size of the permutation. Of course there is a tradeoff with speed, since the switch fabric may have to operate at a higher speed if more than one iterations are required for each permutation. The number of iterations is a parameter of importance as shown subsequently (*infra* Section C).

IB.2 Weighted Approaches

In the weighted approaches, the sizes of the queues affect the execution of the scheduling method. In the maximum weight bipartite matching problem the edges of the graph are assigned weights and the objective is to compute a matching of maximum weight. Maximum weight bipartite matching has the advantage that it has been proven theoretically so be stable under admissible traffic where the traffic flow from input $i$ to output $j$ can be modeled as a sequence of independent and identically distributed random variables. See N. McKeown, V. Anantharam, and I. Walrand, "Achieving 100% throughput in an input-queued switch," in *Proceedings IEEE INFOCOM'96,* (San Francisco, CA), pp. 296-302, March 1996 and A. Mekkittikul and N. McKeown, "A practical scheduling method to achieve 100% throughput in input-queued switches," in *Proceedings IEEE INFOCOM'98,* (San Francisco, CA), pp. 792-799, March 1998. McKeown conjectures that MWBM is stable under all admissible flows, a conjecture that is also supported by the experiments. See N. W. McKeown, "Scheduling Algorithms for Input-Queued Cell Switches" PhD thesis, University of California at Berkeley, 1995. On the other hand, MWBM methods are deemed impractical for hardware implementation. For input-output pair $(i, j)$ let $q_{ij}$ denote the occupancy of queue $Q(i, j)$, i.e. the number of cells queued at input $i$ with destination $j$.

### IB.2(a) MWBM-LOF and MWBM-LPF

Two distinct flavors of maximum weight matching schedulers have been studied, each defining the weights on the edges of the bipartite graph in a different way.

In the MWBM-LQF approach the weight $w_{ij}$ of an edge is set equal to $q_{ij}$. See N. McKeown, V. Anantharam, and I. Walrand, "Achieving 100% throughput in an input11 queued switch," *in Proceedings IEEE INFOCOM'96,* (San Francisco, CA), pp. 296-302, March 1996. In the MWBM-LPF method, first weights for the ports are defined. See A. Mekkittikul and N. McKeown, "A practical scheduling method to achieve 100% throughput in input-queued switches," *in Proceedings IEEE INFOCOM'98*, (San Francisco, CA), pp. 792-799, March 1998. In particular set $S_i = \Sigma$ output$_j q_{ij}$ for an input $i$. Analogously for an output $j$, $R_j = \Sigma$ input$_i q_{ij}$. For the weighted bipartite matching instance define $w_{ij}$ to be $S_i + R_j$ if $q_{ij} > 0$, and 0 otherwise. Both MWBM-LQF and MWBM-LW are stable under admissible traffic with independent arrival processes. See N. McKeown, V. Anantharam, and I. Walrand, 'Achieving 100% throughput in an input-queued switch," in *Proceedings IEEE INFO COM'96,* (San Francisco, CA), pp. 296-302, March 1996 and A. Mekkittikul and N. McKeown, "A practical scheduling algorithm to achieve 100% throughput in input-queued switches," in *Proceedings IEEE INFOCOM'98*, (San Francisco, CA), pp. 792-799, March 1998. The fastest method to compute a maximum-weight bipartite matching runs in $O(n^2 \log n + nm)$ time worst-case. See R. G. Busaker and P. J. Gowen, "A procedure for determining minimal-cost flow network patterns," Tech. Rep. ORO-15, Operational Research Office, Johns Hopkins University, Baltimore MD, 1961; W. S. Jewell, "Optimal flow through networks," Tech. Rep. 8, Operations Research Center, MIT, Cambridge, MA, 1958; and M. L. Fredman and R. B. Tarjan, "Fibonacci heaps and their uses in improved network optimization algorithms," *Journal of the ACM,* vol. 34, pp. 596-615, 1987. If the maximum weight of an edge is bounded by C, the cost-scaling method of Gabow and Tarjan runs in $O(n^{1/2}m\log(nC))$ time worst case. See also J. B. Orlin and R. K. Ahuja, "New scaling algorithms for the assignment and minimum mean cycle problems," *Mathematical Programming,* vol. 54, pp. 41-56, 1992 and A. V. Goldberg and R. Kennedy, "Global price updates help," *SIAM Journal on Discrete Mathematics,* vol. 10, pp. 551-572, 1997 for alternative cost-scaling methods.

### IB.2(b) ILPF

ILPF is a simple heuristic proposed in to approximate the solution found by MWBM-LPF. See A. Mekkittikul and N. McKeown, "A practical scheduling algorithm to achieve 100% throughput in input-queued switches," in *Proceedings IEEE INFOCOM'98,* (San Francisco, GA), pp. 792-799, March 1998. The heuristic exploits the special assignment of edge weights as a function of port weights. The inputs and outputs are sorted according to their S and R values. The sorted list of outputs is traversed in decreasing order and output $j$ is matched to the input $i$ with the largest $S_i$ value such that (i) i is still unmatched and (ii) $q_{ij} > 0$. No justification is offered in why this heuristic may approximate the maximum weight matching found by MWBM-LPF. See A. Mekkittikul and N. McKeown, "A practical scheduling algorithm to achieve 100% throughput in input-queued switches," in *Proceedings IEEE INFOCOM'98,* (San Francisco, CA), pp. 792-799, March 1998. However, it is a well-known fact in matching theory that ILPF will find the optimum solution if the underlying bipartite graph is complete, i.e. an edge exists between all input-output pairs. See R. K. Ahuja, T. L. Magnanti, and J. B. Orlin, "Network Flows: Theory, Algorithms and Applications" Prentice Hall, 1993.

### IB.2(c) RR-LOF

This scheduler is similar to the RR-RND method described in Section IB.1(d). The difference is that each input $i$ selects among the not taken outputs $j$ the one with the maximum $q_{ij}$ value.

It is an objective of the present invention to improve scheduling in high-throughput input-queued switches. The present invention uses a *Shakeup* technique, which can be used in conjunction with a number of the existing MBM and MWBM heuristics to improve their performance dramatically. The Shakeup technique assumes an initial matching is provided, and unmatched nodes have the ability to "knock out" existing matches. Intuitively, this provides a mechanism to jump out of local maxima in the matching heuristic.

To meet the objectives of the present invention, there is provided a computer-implemented unweighted queueing method for a system with M groups of N input queues each of said N input queues requesting a unique one of N services, wherein M and N are natural numbers, said method comprising representing each of said M groups as a node in a first set of vertices of a bipartite graph; representing each of said N services as a node in a second set of vertices of said bipartite graph; representing each non-empty queue as an edge between a vertex in said first set corresponding to one of said M groups to which said each non-empty queue belongs to and a vertex in said second set corresponding to a service requested by said each non-empty queue; performing an initial matching by finding a subset of edges such that no vertex is incident to more than one edge in such subset; performing an unweighted shakeup matching for a hitherto unmatched vertex x in said first set to a vertex y in the second set by performing an appropriate one of following two steps, wherein if x matches with more than one of said vertices in the second set, vertex y being selected at random: adding new matching (x, y) if y is not part of any previous matching; replacing a matching involving y by a matching (x, y) if y is already part of a matching (z, y), wherein z is a vertex in said first set; and repeating for each unmatched vertex in said first set.

Another aspect of the present invention is a computer-implemented unweighted queuing method for a system with M group of N input queues each of said N input queues requesting a unique one of N services, wherein M and N are natural numbers, said method comprising: representing each of said M groups as a node in a first set of vertices of a bipartite graph; representing each of said N services as a node in a second set of vertices of said bipartite graph; representing each non-empty queue as an edge between a vertex in said first set corresponding to one of said M groups to which said each non-empty queue belongs to and a vertex in said second set corresponding to a service requested by said each non-empty queue; performing an initial matching by finding a subset of edges such that no vertex is incident to more than one edge in such subset, wherein if a vertex can be matched using more than one edges, one edge is selected from said more than one edges with a probability relative to the size of queues associated with each of said one or more edges; performing a weighted shakeup matching by performing an appropriate one of following two steps for a hitherto unmatched vertex x in said first set to a vertex y in the second set: if y is not part of any previous matching, said vertex y being selected with a probability:

$$\frac{q_{xy}}{\sum_{k=1}^{N} q_{xk}}$$

wherein $q_{xy}$ is a length of a queue between vertices x and y;
replacing a matching involving y by a matching (x,y) if y is already part of a matching (z,y), said replacement being done with a probability:

$$\frac{q_{xy}}{q_{xy} + q_{zy}}$$

wherein z is a vertex in said first set; repeating for each unmatched vertex in said first set; and repeating for each unmatched vertex in said first set.

Yet another aspect of the present invention is a method of unweighted routing in a switch comprising input ports and output ports, having cells to route between said input ports and said output ports, each input port having one queue each for each said output port, thereby each input port having as many queues as a number of said output ports, said method comprising: representing each said input ports as a node in a first set of vertices of a bipartite graph; representing each said output ports as a node in a second set of vertices of said bipartite graph; representing each non-empty queue between any of said input ports and any of said output ports as an edge between a vertex in said first set corresponding to said any of said input ports and a vertex in said second set corresponding to said any of said output ports, thereby creating a set of edges; performing an initial matching by finding a subset of edges such that no vertex is incident to more than one edge in said subset; performing an unweighted shakeup matching for a hitherto unmatched vertex x in said first set to a vertex y in the second set by performing an appropriate one of the following two steps, wherein if x matches with more than one of said vertices in the second set, vertex y being selected at random: adding new matching (x,y) if y is not part of any previous matching; replacing a matching involving y by a matching (x, y) if y is already part of a matching (z,y) wherein z is a vertex in said first set; and repeating for each unmatched vertex in said first set.

Yet another aspect of the present invention is a method of weighted routing in a switch comprising input ports and output ports, having cells to route between said input ports and said output ports, each input port having one queue each for each said output port, thereby each input port having as many queues as a number of said output ports, said method comprising: representing each said input ports as a node in a first set of vertices of a bipartite graph; representing each said output ports as a node in a second set of vertices of said bipartite graph; representing each non-empty queue between any of said input ports and any of said output ports as an edge between a vertex in said first set corresponding to said any of said input ports and a vertex in said second set corresponding to said any of said output ports, thereby creating a set of edges; performing an initial matching by finding a subset of edges such that no vertex is incident to more than one edge in such subset, wherein if a vertex can be matched using more than one edges, one edge is selected from said more than one edges with a probability relative to a size of a queue associated with each of said one or more edges; performing a weighted shakeup matching by performing an appropriate one of following two steps for a hitherto unmatched vertex x in said first set to a vertex y in the second set: if y is not part of any previous matching, said vertex y being selected with a probability:

$$\frac{q_{xy}}{\sum\limits_{k=1}^{N} q_{xk}}$$

wherein $q_{xy}$ is a length of a queue between vertices x and y; replacing a matching involving y by a matching (x,y) if y is already part of a matching (z,y), said replacement being done with a probability:

$$\frac{q_{xy}}{q_{xy} + q_{zy}}$$

wherein z is a vertex in said first set; repeating e for each unmatched vertex in said first set; repeating for each unmatched vertex in said first set.

Preferably unweighted shakeup is performed for every alternate matching.

Preferably weighted shakeup is performed for every alternate matching.

Preferably unweighted shakeup is performed only if no increase in the size of matching is possible without shakeup.

Preferably weighted shakeup is performed only if no increase in the size of matching is possible without shakeup.

Yet another aspect of the present invention is an unweighted shakeup switch for use in a network, said switch comprising: input ports; output ports, wherein cells are routed between said input ports and said output ports; a graph generator that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set; a matcher for performing an initial matching by finding a subset of edges such that no vertex is incident to more than one edge in such subset; an unweighted shakeup matcher for performing an unweighted shakeup matching for a hitherto unmatched vertex x in said first set to a vertex y in the second set, wherein said unweighted shakeup matcher adds new matching (x,y) if y is not part of any previous matching and replaces g a matching involving y by a matching (x,y) if y is already part of a matching (z,y).

Still another aspect of the present invention is a weighted shakeup switch for use in a network, said switch comprising: input ports; output ports, wherein cells are routed between said input ports and said output ports; a graph generator that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set; a matcher for performing an initial matching by finding a subset of edges such that no vertex is incident to more than one edge in such subset; an weighted shakeup matcher for performing an weighted shakeup matching for a hitherto unmatched vertex x in said first set to a vertex y in the second set, wherein said unweighted shakeup matcher adds (x,y) if y is not part of any previous matching, said vertex y being selected with a probability:

$$\frac{q_{xy}}{\sum_{k=1}^{N} q_{xk}}$$

wherein $q_{xy}$ is a length of a queue between vertices x and y, and replaces a matching involving y by a matching (x,y) if y is already part of a matching (z,y), said replacement being done with a probability:

$$\frac{q_{xy}}{q_{xy} + q_{zy}}$$

Preferably in the unweighted shakeup switch unweighted shakeup is performed for every alternate matching.

Preferably in the weighted shakeup switch weighted shakeup is performed for every alternate matching.

Preferably in the unweighted shakeup switch unweighted shakeup is performed only if no increase in the size of matching is possible without shakeup.

Preferably in the weighted shakeup switch weighted shakeup is performed only if no increase in the size of matching is possible without shakeup.

Still another aspect of the present invention is a network system comprising a 15 plurality of switches for routing messages, a first subset of the plurality of said switches being unweighted shakeup switches, a second subset of the plurality of said switches being weighted shakeup switches.

The above objectives and advantages of the present invention will become more apparent by describing in detail preferred embodiments thereof with reference to the attached drawings in which:

Fig. 1 is a bipartite graph abstraction of the scheduling problem in a switch;
Fig. 2 is a crossbar switch that supports VOQ with N=4;
Fig. 3 shows stability levels for PIM in regular and shake varieties;
Fig. 4 shows stability levels for SLIP in regular, shake, and hybrid varieties;
Fig. 5 shows stability levels for RND in regular, shake and hybrid varieties;
Fig. 6 shows stability levels for RR-RND in regular and shake varieties;
Fig. 7 shows stability levels for SHAKE;
Fig. 8 shows stability levels for ILPF in regular, shake, and weighted shake varieties;
Fig.9 shows stability levels for RR-LQF in regular, shake and weighted shake varieties;
Fig. 10 shows stability levels for SHAKE-WT;
Fig. 11 shows average delay for PIM in regular and shake varieties;
Fig. 12 shows average delay for SLIP in regular, shake, and hybrid varieties;
Fig. 13 shows average delay for RND in regular, shake, and hybrid varieties;
Fig. 14 shows average delay for RR-RND in regular and shake varieties;
Fig. 15 shows average delay for SHAKE;
Fig. 16 shows average delay for ILPF in regular, shake, and weighted shake varieties;
Fig. 17 shows average delay for RR-LQF regular, and weighted shake varieties;
Fig. 18 shows average delay for SHAKEWT;
Fig. 19 shows average delay for MBM heuristics with bursty traffic;
Fig. 20 shows average delay for MWBM heuristics with bursty traffic;
Fig. 21 shows average delay for MBM heuristics with different switch sizes;
Fig. 22 shows average delay for MWBM heuristics with different switch sizes;
Fig. 23 shows a flowchart depicting a preferred embodiment of the unweighted shakeup method;
Fig. 24 shows a flowchart depicting a preferred embodiment of the weighted shakeup method;
Fig. 25 shows a preferred embodiment of an unweighted shakup switch;
Fig. 26 shows a preferred embodiment of a weighted shakup switch; and
Fig. 27 shows a preferred embodiment of a network system with weighted and unweighted shakeup switches.

## A. The Shakeup Technique

The shakeup approach comes in two varieties: one for unweighted and another for weighted heuristics. The motivation behind the Shakeup operation in both cases is to provide a way for the scheduler to escape from a local maximum, i.e. a maximal matching, and by doing so to speed the convergence of the queuing system to a steady state. Randomization is a crucial component of Shakeup. For the present discussions on bipartite graphs, let A be the set of vertices representing input ports, and let B be the set of vertices representing output ports.

## A.1 Unweighted Shakeup

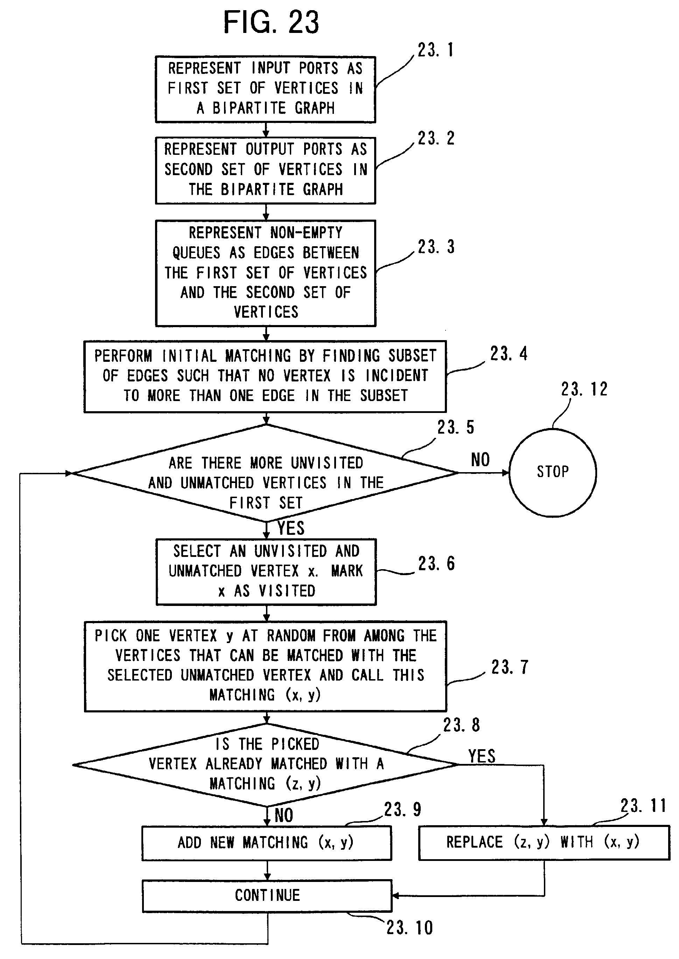

The preferred embodiment of the unweigted shakeup method is described using a flowchart shown in FIG. 23 that describes the steps in the unweighted shakeup method. The switch used in this case has N input ports and N output ports. Each input port has N queues associated with it, each queue holding cells to be routed for a specific output port. Thus there are N x N queues. Cells to be transmitted are thus queued in the appropriate on of the N x N queues. At 23.1 each input port is represented as a first set of vertices in a bipartite graph. At 23.2 each output port is represented as a second set of vertices in the bipartite graph. At 23.3 non-empty queues are represented as edges in this bipartite graph. It should be clear that at a maximum there are N x N edges possible if all the queues are non-empty. Some initial matching is then performed in 23.4; the initial matching has perhaps been generated through some conventional heuristic. In this initial matching a subset of edges is selected such that no vertex is incident to more than one edge.

An unmatched vertex is now selected at 23.6. Note that the process loops for each edge in step 23.5. In a key step of the unweighted shakeup technique, the basic idea is that each unmatched vertex in A will be allowed to force a match for itself, even if that means removing an existing match. Specifically, each unmatched vertex x in set A that is incident to at least one edge selects uniformly at random one of those incident edges, say (x,y) in 23.7. A test is performed at 23.8 to see a match (x,y) exists. If $y \in B$ is unmatched, then (x, y) is added to the matching at 23.9. If y is already matched through edge (z, y), $z \in A$, then (z, y) is removed from the matching and (x, y) is added at 23.11. If more than one vertex in A attempts to match to the same vertex in B during a Shakeup, then one of the competing vertices in A is selected in a random fashion as the winner. Shakeup is not implemented in parallel but instead unmatched vertices are processed in A in a randomly selected order. Note that unweighted Shakeup returns a matching that is at least as large as the initial matching.

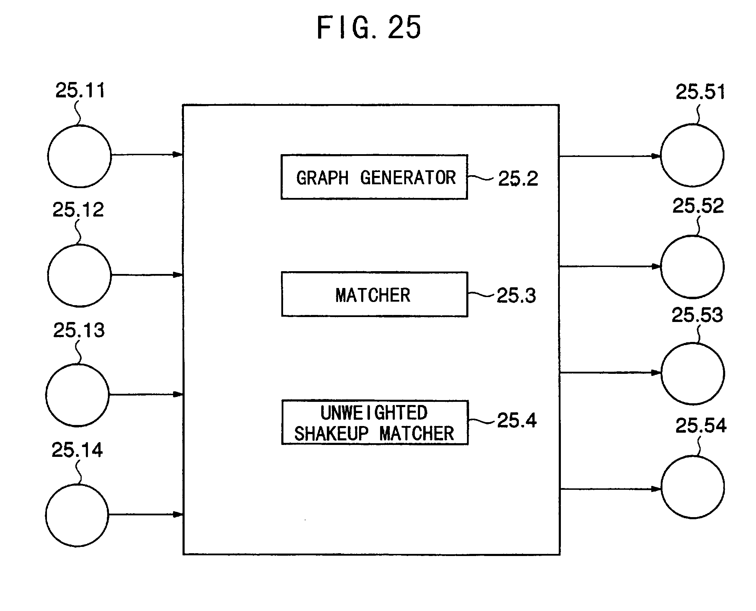

FIG. 25 shows a preferred embodiment of an unweighted shakeup switch according to the present invention. This switch has four input ports 25.11-25.14 and four output ports 25.51-25.54. Cells are routed between the input ports and the output ports. An unweighted scheduler 25.6 performs the routing. The unweighted scheduler comprises a graph generator 25.2 that generates a bipartite graph with each input ports 25.11-25.14 as a node in a first set of vertices of the bipartite graph and each output ports 25.51-25.54 is a node in a second set of vertices of the bipartite graph. A specific cell to be routed between an input port and an output port is an edge between a vertex in the first set and the second set. The unweighted scheduler further comprises a matcher 25.3 for performing an initial matching by finding a subset of edges such that no vertex is incident to more than one edge in such subset. An unweighted shakeup matcher 25.4 performs an unweighted shakeup matching for a hitherto unmatched vertex x in said first set to a vertex y in the second set. The unweighted shakeup matcher adds new matching (x,y) if y is not part of any previous matching and replaces g a matching involving y by a matching (x,y) if y is already part of a matching (z,y).

## A.2 Weighted Shakeup

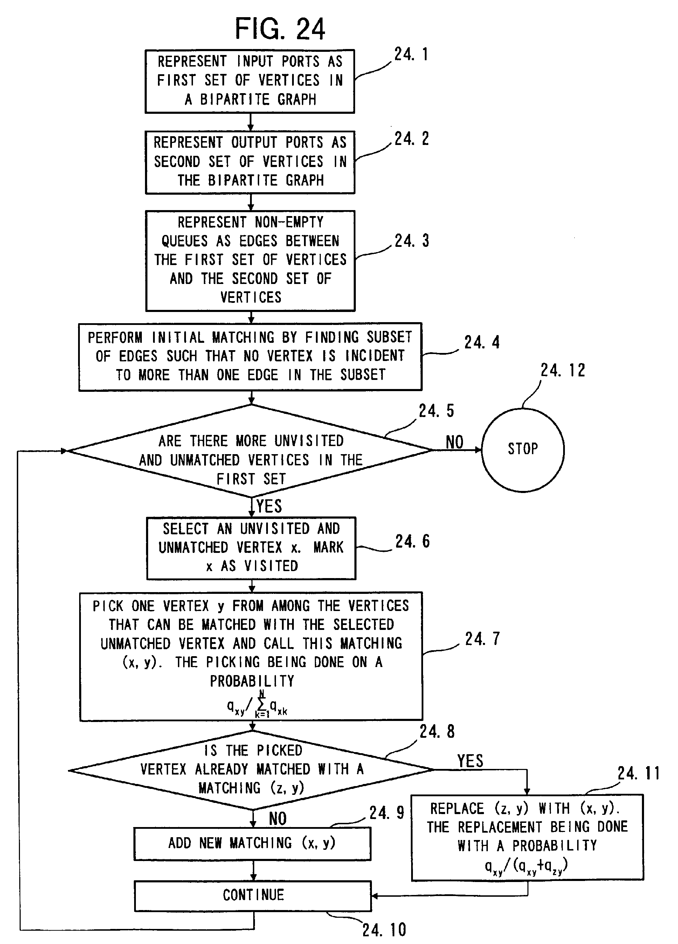

The preferred embodiment of the weigted shakeup method is described using a flowchart shown in FIG.24 that describes the steps in the unweighted shakeup method.

The switch used in this case has N input ports and N output ports. Each input port has N queues associated with it, each queue holding cells to be routed for a specific output port. Thus there are N x N queues. Cells to be transmitted are thus queued in the appropriate on of the N x N queues. At 24.1 each input port is represented as a first set of vertices in a bipartite graph. At 24.2 each output port is represented as a second set of vertices in the bipartite graph. At 24.3 non-empty queues are represented as edges in this bipartite graph. It should be clear that at a maximum there are N x N edges possible if all the queues are non-empty. Some initial matching is then performed in 24.4; the initial matching has perhaps been generated through some conventional heuristic. Weighted Shakeup is slightly different in that it takes into account queue lengths. The basic idea behind extending unweighted to weighted is to give preference to those input and output polls that are heavily loaded; the unweighted Shakeup applied above does not do this. Indeed, as all edges are treated equally in the unweighted Shakeup approach, it is possible that applying unweighted Shakeup to a weighted heuristic will make the solution worse. Weighted Shakeup, therefore, uses weights when selecting possible edges to add to the matching. Specifically, each unmatched vertex in set A that is incident to at least one edge randomly selects one of those edges in 24.6. Note that the process loops for each edge in step 24.5. This random selection of edges is done with a probability proportional to its relative size over all the destination queues. That is, for input port i, if the queue holding cells destined for output j has length $q_{ij}$, then edge (i,j') is selected with probability $q_{ij}/(\Sigma_{k-1}{}^{N}q_{ik})$. Let (i,j') be the selected edge. If the vertex $j' \in B$ is unmatched, then (i,j') becomes part of the matching 24.9. If j' is already matched through edge (k,j'), then with probability $q_{ij}/(q_{ij}, + q_{kJ},)$, (k,j') is removed from the matching and (i,j') is added 24.11. Otherwise, the matching is not modified.

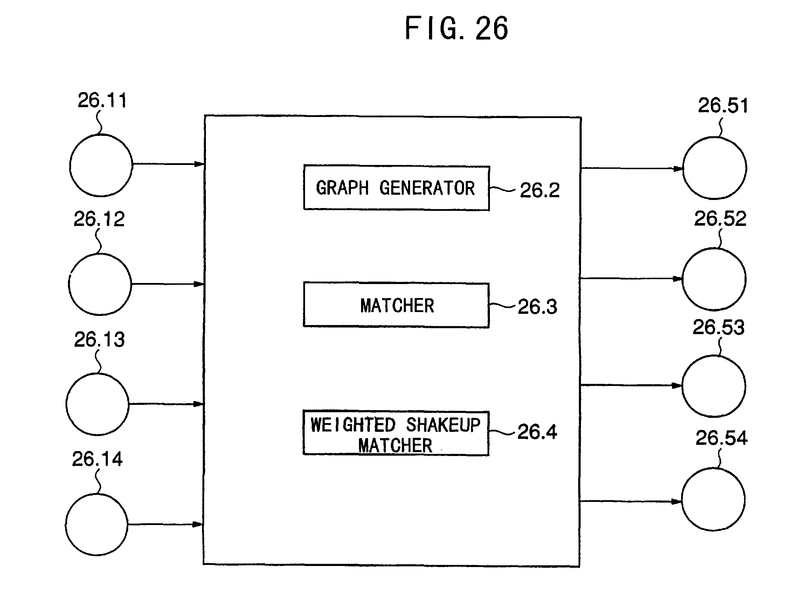

Fig. 26 shows a preferred embodiment of an unweighted shakeup switch according to the present invention. This switch has four input ports 26.11-26.14 and four output ports 26.51-26.54. Cells are routed between the input ports and the output ports. A weighted scheduler 26.6 performs the routing. The weighted scheduler comprises a graph generator 26.2 that generates a bipartite graph with each input ports 26.11-26.14 as a node in a first set of vertices of the bipartite graph and each output ports 26.51-26.54 is a node in a second set of vertices of the bipartite graph. A specific cell to be routed between an input port and an output port is an edge between a vertex in the first set and the second set. The weighted scheduler further comprises a matcher 26.3 for performing an initial matching by finding a subset of edges such that no vertex is incident to more than one edge in such subset. The weighted scheduler further comprises a weighted shakeup matcher 26.4 for performing a weighted shakeup matching for a hitherto unmatched vertex x in said first set to a vertex y in the second set, wherein said weighted shakeup matcher adds (x,y) if y is not part of any previous matching, said vertex y being selected with a probability:

$$\frac{q_{xy}}{\sum_{k=1}^{N} q_{xk}}$$

wherein $q_{xy}$ is a length of a queue between vertices x and y, and replaces a matching involving y by a matching (x,y) if y is already part of a matching (z,y), said replacement being done with a probability:

$$\frac{q_{xy}}{q_{xy} + q_{zy}}$$

Shakeups can be used in a stand-alone manner, or in conjunction with other heuristic approaches. Two general types of implementations are envisioned: *orthogonal and hybrid.* For the orthogonal type, the "basic heuristic" (e.g., SLIP, PIM, etc.) and Shakeup are performed in alternate phases. For example, if SLIP is the basic heuristic sequence of operations would be: SLIP, Shakeup, SLIP, Shakeup, SLIP Shakeup, etc. For the hybrid type, the Shakeup phase is performed simultaneously with the basic heuristic phase. Each unmatched input port examines which output ports it can send cells to. If any of these output ports is not matched, the input port competes for it as defined by the basic heuristic, and does not do Shakeup in this iteration. On the other hand, if all the desired output ports are already matched, then the input port performs Shakeup this iteration instead of the basic heuristic. Although the orthogonal and hybrid approaches are slightly different, the basic idea of using randomization to get out of local maxima is the same, and in practice both approaches are likely to have similar performance. For some implementations, however, the hybrid approach can require less communication than the orthogonal approach. In terms of physical implementation, the Shakeup schemes would be fairly simple to implement, using hardware similar to that needed by many of the existing unweighted heuristics. Some additional logic for a pseudo-random generator would be necessary, but it is estimated that this logic does not have to be sophisticated. The present simulations obtained good performance by implementing Shakeup using the C built-in pseudo-random generator.

A.3 Network System with Shakeup Switches and Unshakeup Switches

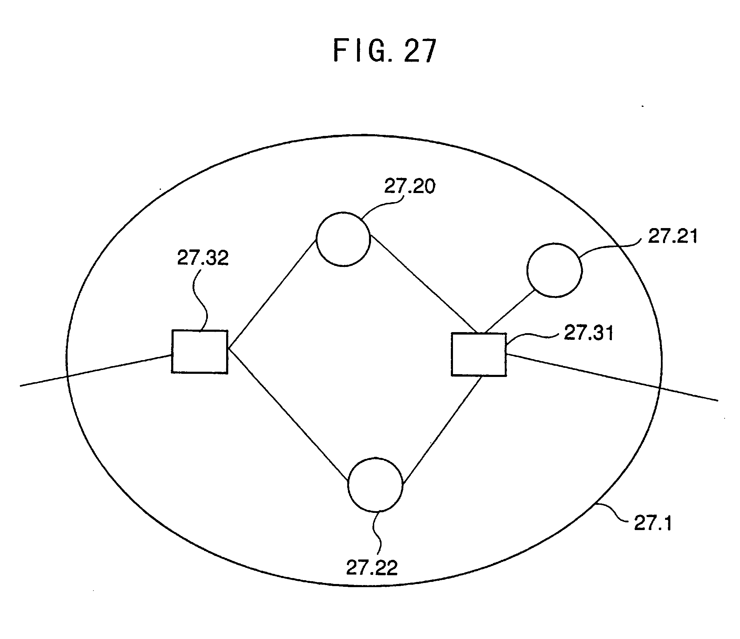

Fig. 27 shows a preferred embodiment of a network system with shakeup and unshakeup switches. This network system comprises a network 27.1 that comprises several switches. Of the switches, 27.31 and 27.32 are unshakeup switches and 27.20, 27.21 and 27.22 are unshakeup switches.

A.4 Theoretical Justification

Theoretical justification for the present approach is discussed. This can be found in earlier work on bipartite matching.

At first sight one may argue that there is no apparent reason why unweighted Shakeup should improve scheduler performance and even converge to a maximal matching. Indeed, an unmatched input i sends only one request to an output j' at each iteration, and j' could very well be matched, in which case the size of the matching will remain the same. However by knocking off the matching the mate of j', a chain of knockoffs is triggered which leads, in a probabilistic sense, to the discovery of an *augmenting path*-a standard technique for increasing the size of a given non-maximum matching. See C. Berge, "Two theorems in graph theory" *Proceedings of the National Academy of Science,* vol. 43, pp.842-844, 1957. This idea has been used with success in the design of probabilistic methods. Some basic facts are now provided.

Formally, a random bipartite graph $G_p(2N)$ is a graph with N vertices on each side of the bipartition, such that an edge between any two vertices on different sides is included with probability p independently of the others. The random graph model has been extensively studied, in part to capture the behavior of graph algorithms on "typical" inputs. See B. Bollobas, *Random Graphs.* Harcourt Brace Janovich, 1985 for an excellent survey of the subject. In the present problem p could be related to, although it is clearly different from, the probability that input i has a cell to send to output j for any pair (i,j) at the given time step at which a permutation needs to be found. It should be clear though that the bipartite graph of the switch cannot be accurately modeled by $G_p(2N)$, even for uniform traffic, due to the existence of queues. Consider a simplified unweighted Shakeup where in every iteration the unmatched vertices in A are considered in a fixed order. It was shown by Angluin and Valiant that this simplified Shakeup delivers with high probability a perfect matching on $G_p(2N)$ in O(N log N) time, when p > (clog N)/N, for some constant c > 0. See D. Angluin and L. C. Valiant, "Fast probabilistic algorithms for Hamiltonian circuits and matchings," *Journal of Computer and System Sciences,* vol. 18, pp.155-193, 1979. Therefore, repeated application of unweighted Shakeup will give optimal throughput at a single time slot, under appropriate probabilistic assumptions on the traffic. This theoretical evidence is complemented by the experimental results in Section C.

### *B.* Framework *for Comparison*

The use of the approach of the present invention is demonstrated herein with a variety of MBM and MWBM heuristics. As can be seen, in several cases, the range of switch stability increases from approximately 85% to over 95% when the techniques of the present invention are used. It can also be seen that even for stable flows, the use of Shakeup can greatly reduce the average cell delay.

Through extensive simulation, a number of different scheduling techniques are compared.

It is believed that he range of stability is a fundamentally important metric for scheduling methods. An experimental definition of stability is provided herein and stability tests are run for a wide range of scheduling approaches, traffic types, and traffic loads. A number of different traffic types, designed to demonstrate the strengths and weaknesses of scheduling techniques, are compared. The establishment of a benchmark suite of traffic types is an important contribution for the analysis of scheduling methods, particularly when the scheduling methods or traffic models are mathematically intractable. In particular, "low-degree" traffic flows, which substantially degrade the performance of MBM- and MWBM-related heuristics is compared.

To compare the schedulers a variety of traffic types are also compared. In general, the goal is to begin to define a benchmark suite of traffic types that could be used to compare different schedulers. These traffic types should be selected to represent both typical and worst-case situations.

For these simulations, each input port receives cells generated from its own source (that is, there are N sources). Each source is independent of the other sources, and generates at most one cell per time step.

A variety of probability density functions are used for selecting output port destinations. One of the major contributions of this paper is the present investigation of *low-degree* traffic patterns, which incur poor performance for many schedulers. In this context, low-degree implies that the input and output ports of the bipartite graph have low degree. Intuitively, greedy heuristics should perform better for high-degree graphs than for low-degree graphs. High-degree graphs will have many good (i.e., optimal or near-optimal) matchings to choose from, while far fewer good matchings will exist for a low-degree graph. For a high-degree graph, a wealth of good solutions exist that greedily adding an edge to a matching probably will not greatly affect the solution quality. This is not the case for a low-degree graph, where early bad decisions can easily hurt the solution quality.

Three types of destination probability density functions are also considered.

### B.1 High-degree balanced

Output ports are chosen with a uniform distribution over the N possibilities. All input ports and output ports will handle the same traffic load.

### B.2 Low-degree balanced

Each input port is the source of exactly k flows and each output port is the destination of exactly k flows. All flows have the same rate. To create the flows at the start of the simulation, k random permutations are used, selecting each of the N! possibilities with equal probability.

For example, let N = 8 and k = 2. Suppose the first permutation is (1,3,7,5,6,4,2,0) and the second permutation is (5,6,2,3,1,4,0,7). This implies input port 0 will send cells only to output ports 1 and 5 (with equal probability); input port 1 will send cells only to output ports 3 and 6; etc. Note that it is possible for an input port to have less than k possible destinations. In this example, input port 5 sends only to output port 4.

For this type of traffic, all input ports and output ports will have the same load. Also note that for the experiments described in Section C, only a single random set of permutations is used.

B.3 Low-degree unbalanced

McKeown et al provide an example of an admissible flow pattern that causes the queues to grow unboundedly if MBM is the scheduling algorithm. See N. McKeown, V. Anantharam, and I. Walrand, "Achieving 100% throughput in an input-queued switch," in *Proceedings IEEE INFOCOM'96,* (San Francisco, CA), pp. 296-302, March 1996. The example is essentially a case of unbalanced flows. This class is interesting because, intuitively, it is better to give preference to heavily loaded ports. For the present simulations, half of the input ports are the source of exactly k flows and half are the source of 2k flows. Each flow generates traffic at the same rate, so half the input ports are loaded at rate $\lambda$ while the other half are loaded at 2 $\lambda$. To create the flows at the start of the simulation, 2k random permutations are used, selecting each of the N! possibilities with equal probability. For the heavily loaded input ports, all 2k flows are defined by the permutations. For the lightly loaded ports, only the first k permutations are used to define the flows. Note that the output ports will support no less than k flows and no more than 2k flows.

A rate of x% implies all input and output ports are loaded at that rate. For low-degree unbalanced traffic, a rate of x% implies the heavily loaded input ports run at x%, while the lightly loaded input ports run at rate x/2 %.

The burstiness of the traffic can also effect performance. These two types are now considered:

**Non-bursty (Bernoulli):** At each time step, a cell is generated by a source with some fixed probability, independent of all previous traffic. The probability density function that determined the output port is the same for all cells generated by the source.

**Bursty (Geometric):** Traffic is generated as bursts of cells (ON bursts), followed by bursts of no cells (OFF bursts). The probability density function that determines the output port is the same for all ON bursts generated by the source. All cells within an ON burst will have the same destination. To create a burst with expected length m, the burst is discontinued at each time step with probability 1/m. (The use of a geometric distribution to model bursty traffic can be found in See N. W. McKeown, *Scheduling Algorithms for Input-Queued Cell Switches.* PhD thesis, University of California at Berkeley, 1995, for example.)

Most of the present experiments assume non-bursty traffic. It will be seen see later that the experiments confirm empirical findings by McKeown that suggest a linear relationship between expected burst length and expected cell delay for a range of scheduling approaches See N. W. McKeown, *Scheduling Algorithms for Input-Queued Cell Switches.* PhD thesis, University of California at Berkeley, 1995.

***C. Experimental Results***

The experiments provided some valuable insights into the relative performance of different methods. In Table 1 provide a summary of the experimental results are provided for the three most powerful methods MBM, MWBM-LQF and MWBM-LPF. The performance of these methods should be the benchmark against which heuristics are tested. It is interesting to notice how close the performance of MBM is to the performance of the weighted matching methods for the inputs that are examined. Ideally, unweighted heuristics should perform well also, and often they do, but it is demonstrated that there is considerable room for improvement.

Table 1

| Scheduler | $\rho_{hb}$ | $\rho_{lb}$ | $\rho_{lu}$ | $\rho_{hb}$ | $\rho_{lb}$ | $\rho_{lu}$ |
|---|---|---|---|---|---|---|
| MBM | 100% | 100% | 97% | 2.90 | 2.86 | 1.47 |
| MWBM-LQF | 100% | 100% | 100% | 2.94 | 2.70 | 1.35 |
| MWBM-LPF | 100% | 100% | 100% | 2.87 | 2.23 | 1.15 |
| Table 1: Experimental stability rates ($\rho$) and average delays ($\delta$) for MBM and MWBM approaches. High-degree balanced *(hb),* low-degree balanced *(lb),* and low-degree unbalanced *(lu)* flows are used for 32 ports. Average delays are for 100,000 time steps with 85% traffic load. | | | | | | |

A general conclusion that can be drawn from the test data is that the addition of Shakeup or weighted Shakeup on top of most of the examined heuristics improves performance. Another lesson from the experiments is that most of the previously known heuristics reach their full potential in terms of stability typically in 2-3 iterations. However Shakeup typically exhibited slowly improving performance as the number of iterations increased beyond this point. The experiments were designed to fall into three major categories. Each category is elaborated herein providing the description of the different settings and specific comments on the observed results.

C.1 Stability vs. Iterations

In the first category the various methods are tested to determine the maximum input rate for which they are stable as a function of the number of iterations of the method to select a single permutation. This is called the stability rate.

The present definition of stability is by necessity experimental. Let A be a method running for i iterations. The range of traffic rates from 0% to 100% is considered, as defined for the traffic types described in Section B. For every rate value r queried by the search mechanism, the system is simulated for at most $T = 256N^2$ steps. At every time step, a check is done to see if the sum of all the queue lengths Q has become greater than or equal to $16N^2$ if so, the method is declared unstable at rate r. Also, *checkpoints* are established for every 1,000 time steps; if the value of 0 at a checkpoint is equal to or less than the value of Q at the previous checkpoint, the method is declared stable at rate r. Finally, if the method is not declared either stable or unstable after T time steps, the method is declared stable at rate r. If the method is stable for rate r, the search mechanism considers only larger rates in the future. If the method is unstable, only smaller rates are considered in the future. For efficiency, in the actual implementation a linear search is not performed on all possible rates but a binary search is performed instead.

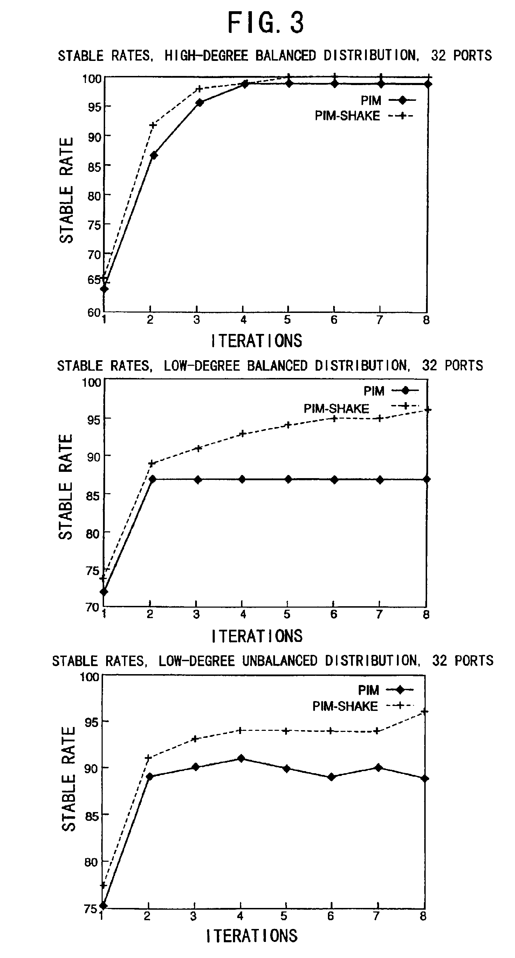

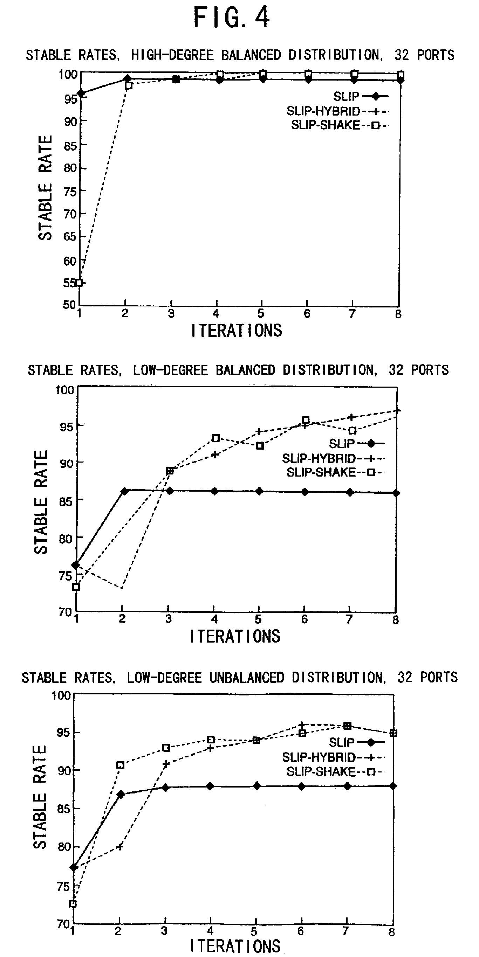

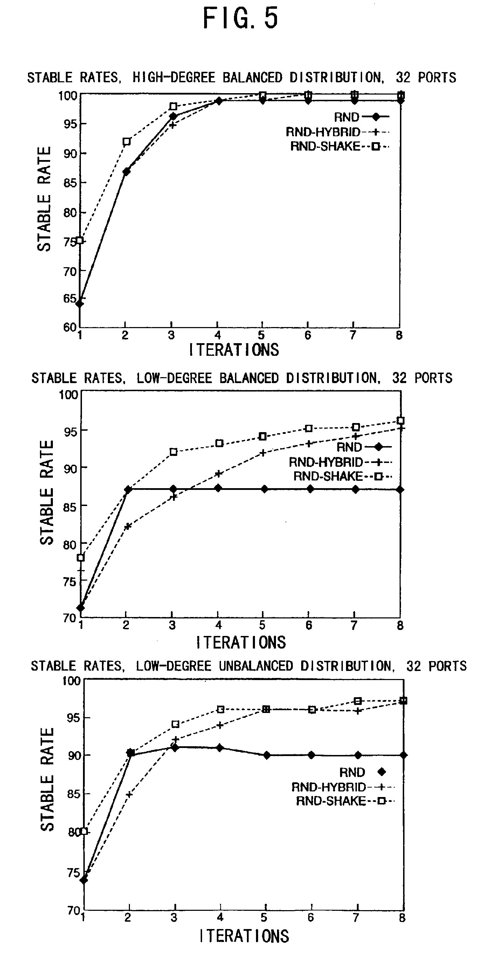

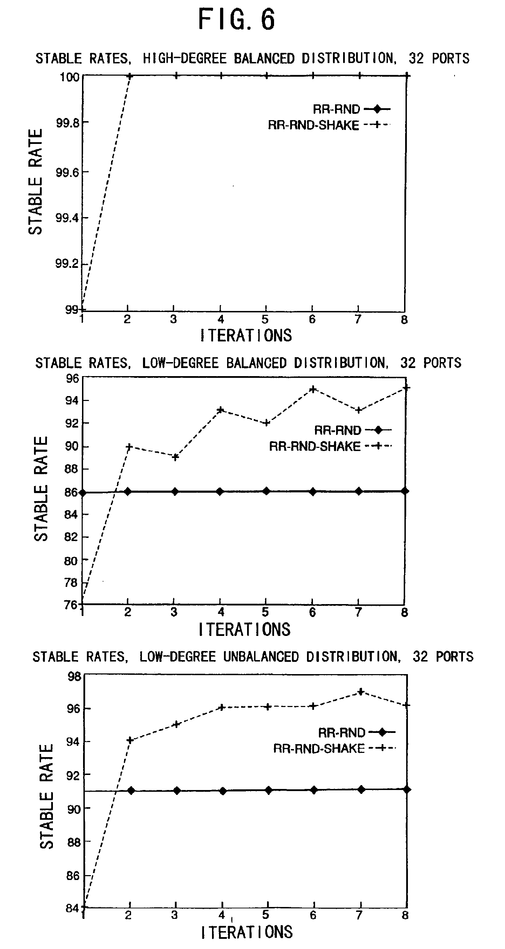

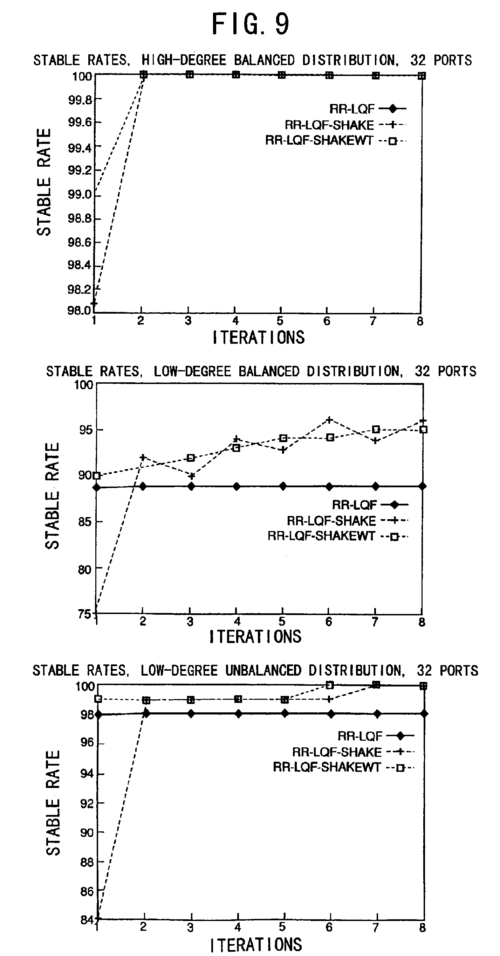

In summary, the experimental space for the first category of experiments consists of all the possible values of the tuple (A, i, r, flow type). The number of iterations i ranges from 1 to 8. Observe that for some of the approaches (MEM, RR-RND, ILPE and RR-LQF), iterations are meaningless since maximal matchings are computed in the first iteration. For those methods a horizontal line is depicted in the graph. The two axes show rate and number of iterations. The relevant graphs are in Figures 3-10. In each graph for this category the results for related methods A are aggregated. Typically there will be three methods in a graph, called X, X-HYBRID and X-SHAKE. X is any vintage method like PIM or SLIP. X-SHAKE, implements the orthogonal use of Shakeup: at every one of the i iterations X is run followed by an execution of unweighted Shakeup, X-HYBRID, implements the hybrid use of Shakeup: at each of the i iterations the basic heuristic X "merged" with Shakeup as outlined in Section A is run.

C.1(a) Unweighted methods

The graphs for this group of experiments demonstrate that the addition of Shakeup to the unweighted heuristics can typically improve the maximum stability rate by 10%. The increase becomes palpable after already two iterations and slowly increases thereafter with the number of iterations. As expected, the increase is smaller for the "easy" high-degree balanced input, on which almost all unweighted heuristics achieve by themselves stability rate of 95% or higher after 3 iterations.

C.1(b) Weighted methods

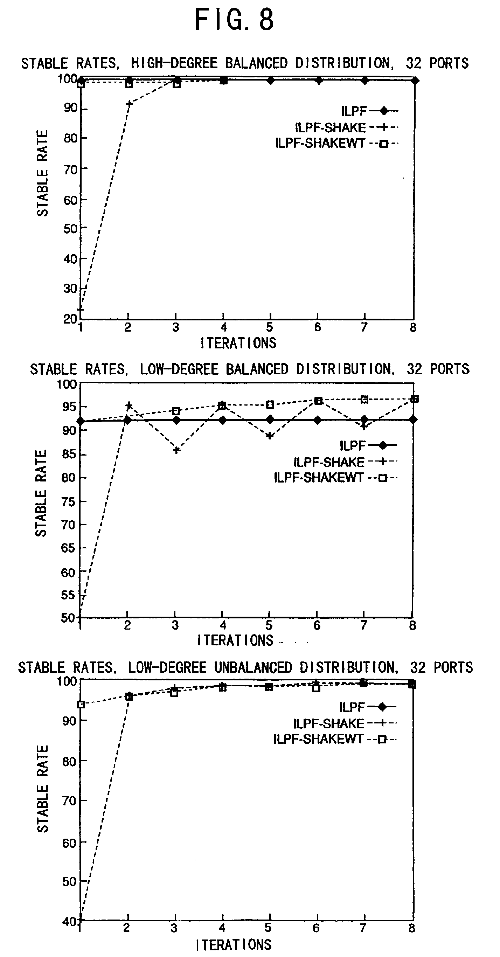

The graphs for the ILPF method (Fig. 8) show that Shakeup provides more modest improvements than in the unweighted case, of the order of 2-3%. This is not surprising given than ILRF is a heavy-duty centralized method that does global sorting.

As expected, weighted Shakeup (SHAKE-WT) performs slightly better than pure Shakeup which can marginally degrade performance every other iteration (due to the fact that it blindly unmatches the heavily loaded ports matched by ILPF). The situation is similar for RR-LQF although the gains from (weighted) Shakeup are larger, of the order of 5-6%.

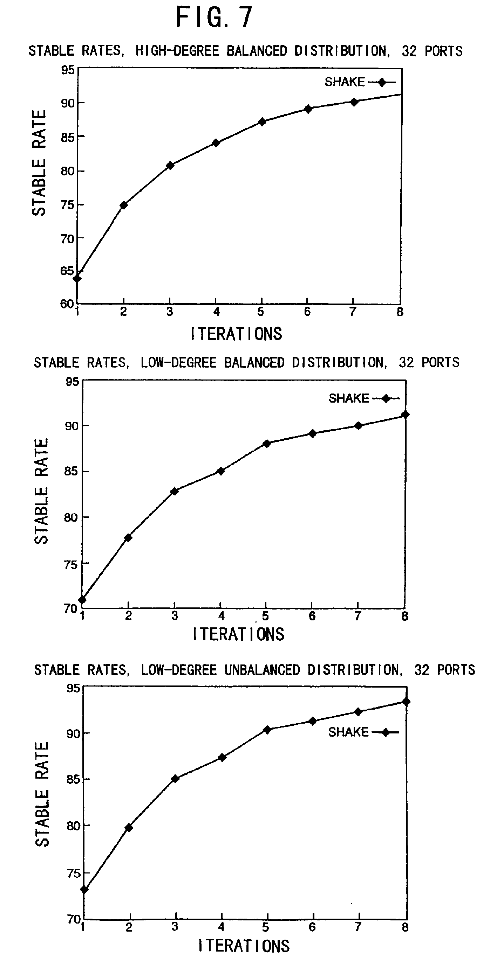

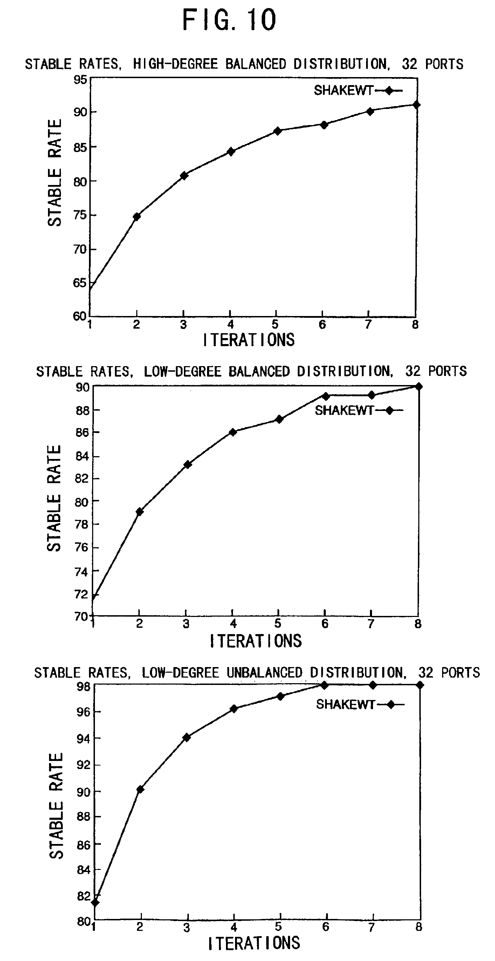

Finally, to demonstrate the robustness of Shakeup and weighted Shakeup are tested as stand-alone methods. The results are shown in Figures 7 and 10. The results are particularly good given the very simple nature of the methods. If enough (i.e. 8) iterations are performed, both methods achieve stability rate of 90% or higher on all types of inputs. In the low-degree unbalanced input, which was specifically designed to be harder for unweighted methods, weighted Shakeup achieves a stability rate of 98% after 6 iterations while Shakeup is barely above 90% at the same number of iterations.

**EP 1 049 352 A2**

C.2 Average Delay vs. Iterations

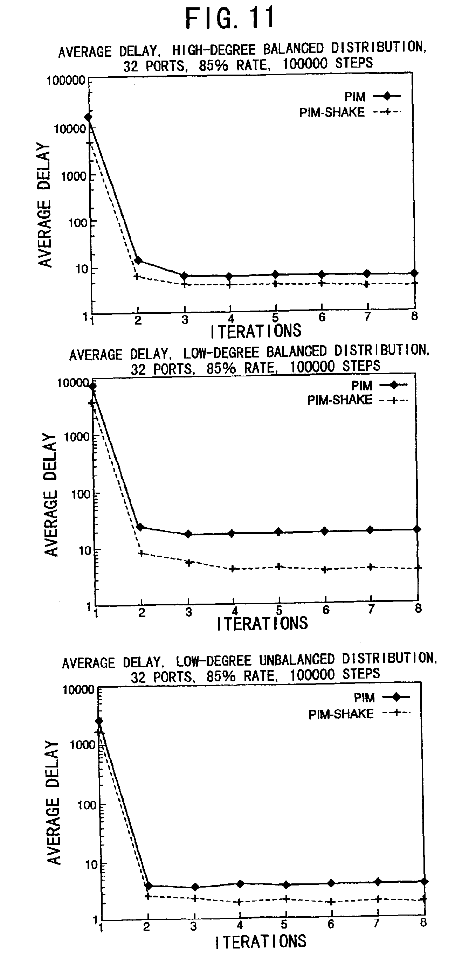

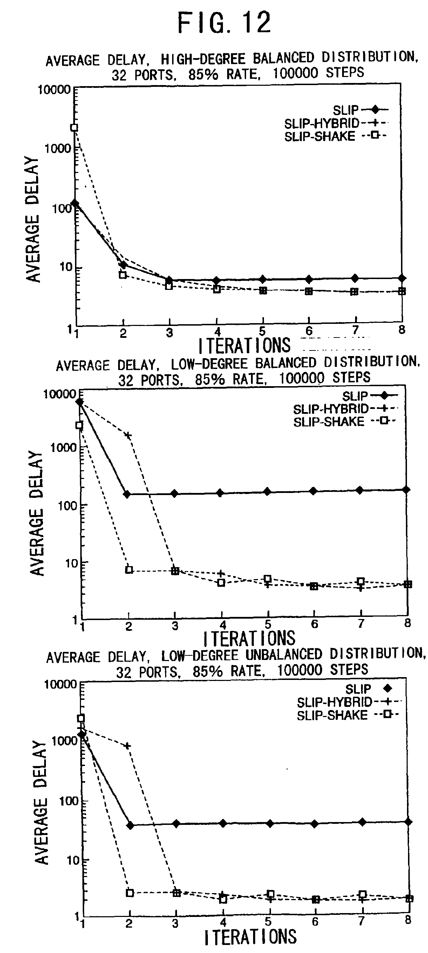

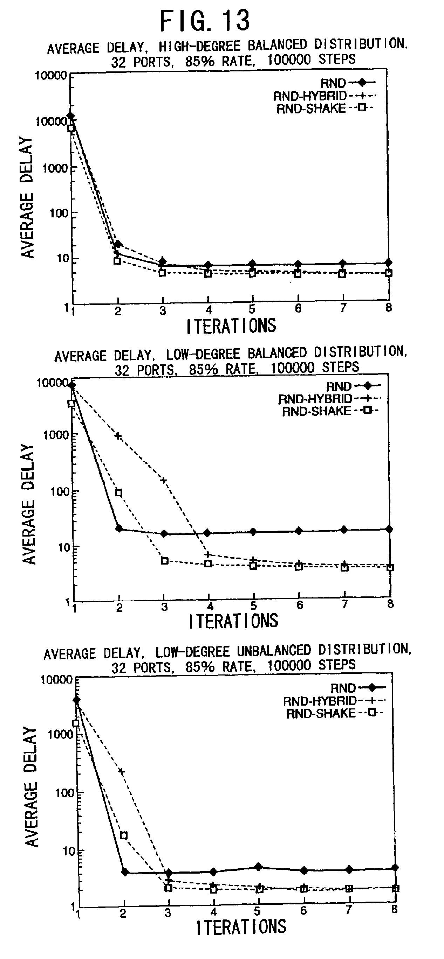

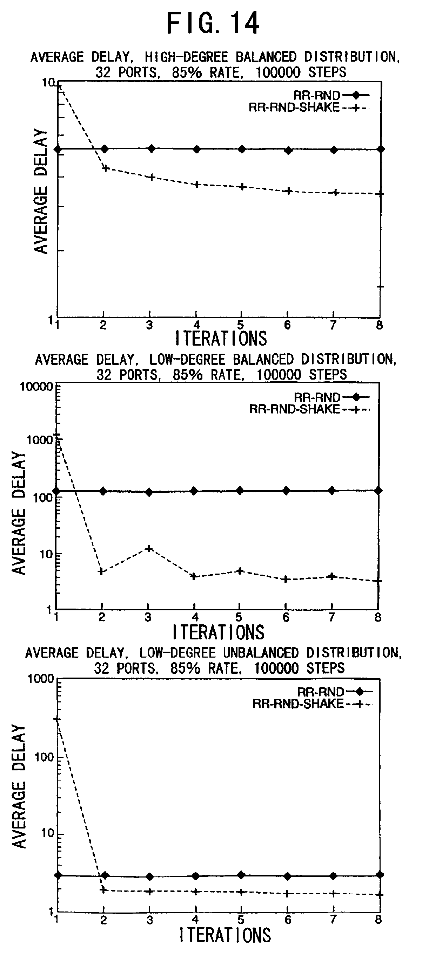

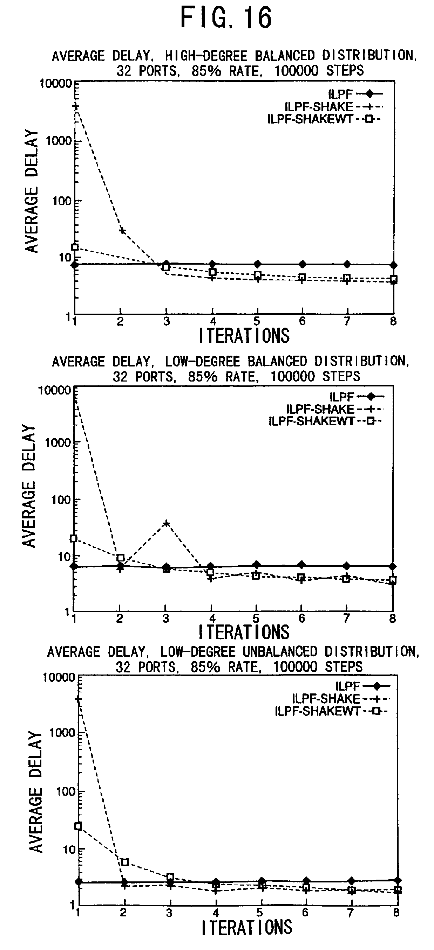

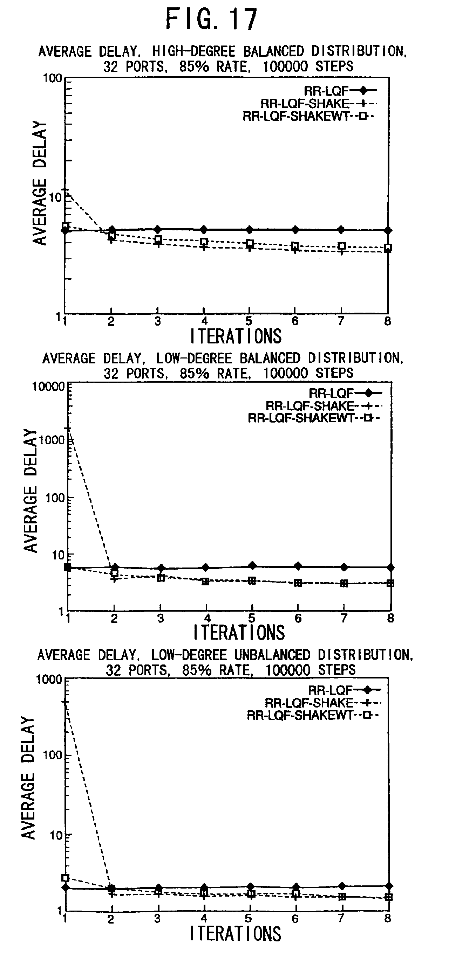

*Average delay* means the average delay of all cells that were successfully routed within the time window of the simulation. (In general, the input queues can still contain cells that do not contribute to this value.) A cell that is routed immediately has delay 0. The stability experiments outlined above, give information that allows in most cases a clear ranking of the methods based on the maximum input rate they can support. However, this ranking would not give the full picture. For a given rate r it could very well be the case that both methods A and A' are declared (eventually) stable but they differ significantly in the average delay they incur on the packets. On the other hand, testing the methods solely based on average delay and ranking them accordingly could be misleading as well. First, a method may actually settle for a large but stable average delay for a given rate r, information that is lost by looking at the average delay only. Second, what is the rate r at which one should examine the average delay incurred by A? If r is high enough so that A is unstable, the average delay obtained will be essentially meaningless and A will be judged unfairly under inputs it cannot possibly handle. Using the data from the stability results this pitfall is avoided by choosing r = 85% for all the average delay graphs, a value at which almost all of the methods tested were shown to be stable. In summary, the experimental space for the Avenge Delay Graphs consists of the possible values of the tuple (A, i, r = 85%, flow type). The two axes show avenge delay (in time steps) and number of iterations. The relevant graphs are in Figures 11-18.

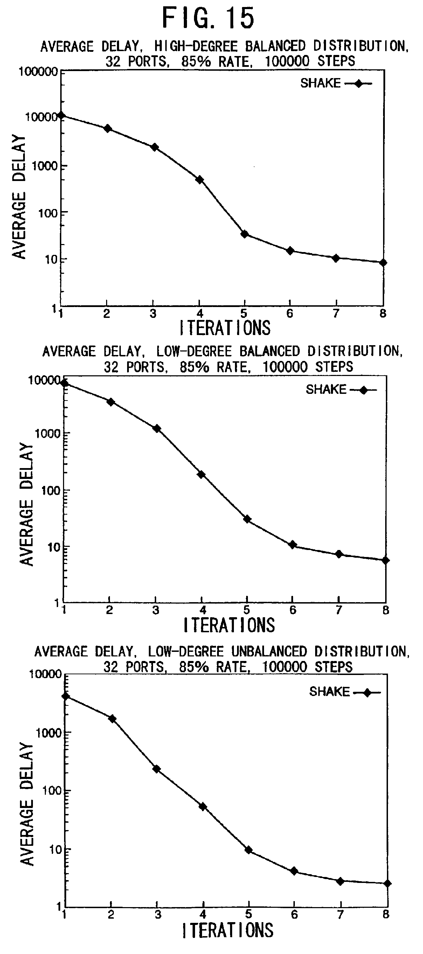

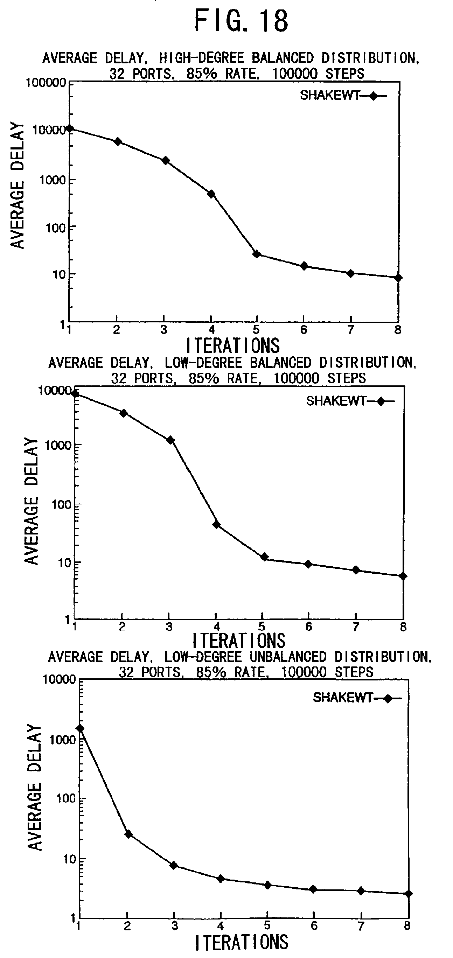

The average delay graphs confirm the picture given by the stability graphs for the advantages gained by Shakeup. The gains are more tangible for the unweighted methods. The improvements obtained by the application of Shakeup range from roughly 10% to a quite dramatic 10-fold improvement for SLIP and RR-RND on low-degree balanced inputs. Again in Figures 15 and 18 Shakeup and weighted Shakeup are tested as stand-alone methods to verify robustness. After 6 iterations, the average delay is competitive with the one obtained by almost any other heuristic.

C.3 Average Delay vs. Burst Size or Ports

In this final category, the qualitative exploration of the different methods are continued by plotting average delay against two other parameters of importance.

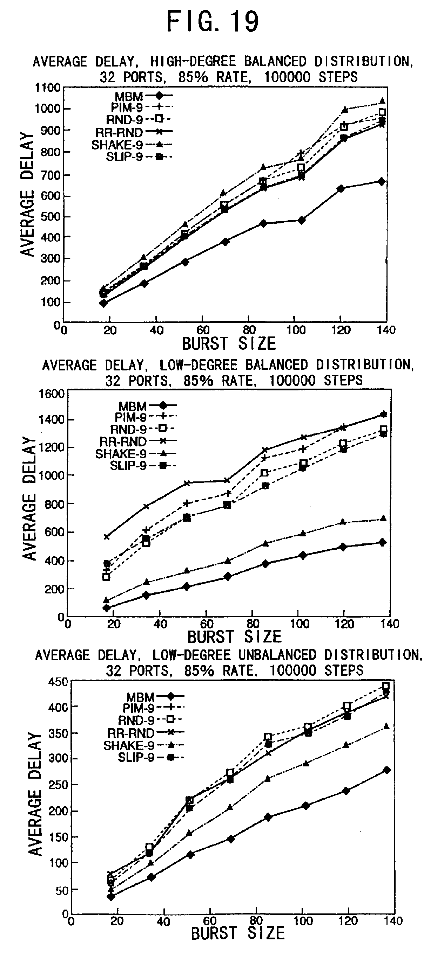

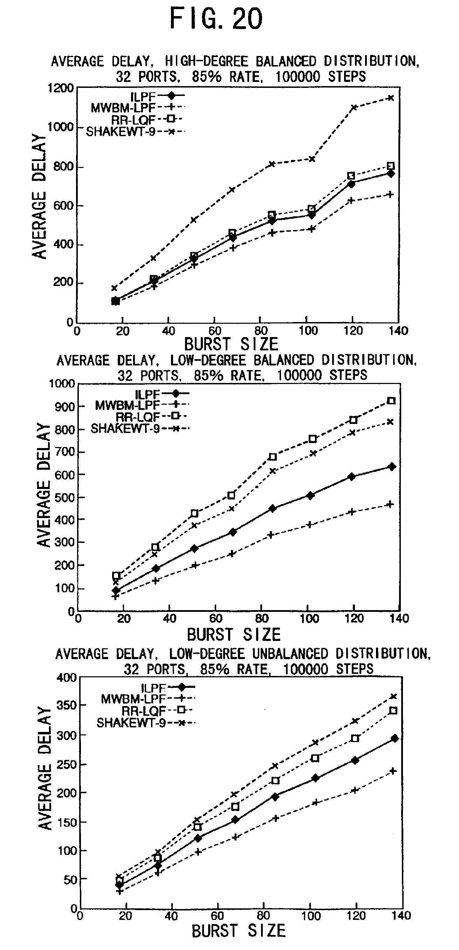

In the first case, the experimental space consists of all possible values of the tuple (A, i = 9, r = 85%, burst size, flow type). The axes show average delay and burst size. See Figures 19 and 20. The number of time steps is set again at 100,000. The burst size increases by increments of 17 in the range [See A. C. Kam and K.-Y, Siu, "Linear complexity algorithms for bandwidth reservations and delay guarantees in input-queued switches with no speedup," in *Proceedings of the 6th International Conference on Network Protocols,* pp. 2-11, 1998 and 136]. The results are as expected, i.e. for all methods the average delay increases as a function of the burst size, and this increase happens essentially at the same rate for all the methods. The curve for the heavy-duty MBM and MWBM methods is essentially the same as the ones for the rest, which implies that the increase of the average delay with the burst size is essentially unavoidable. The conclusion is that increased buffer space is necessary to store packets if bursty traffic is anticipated.

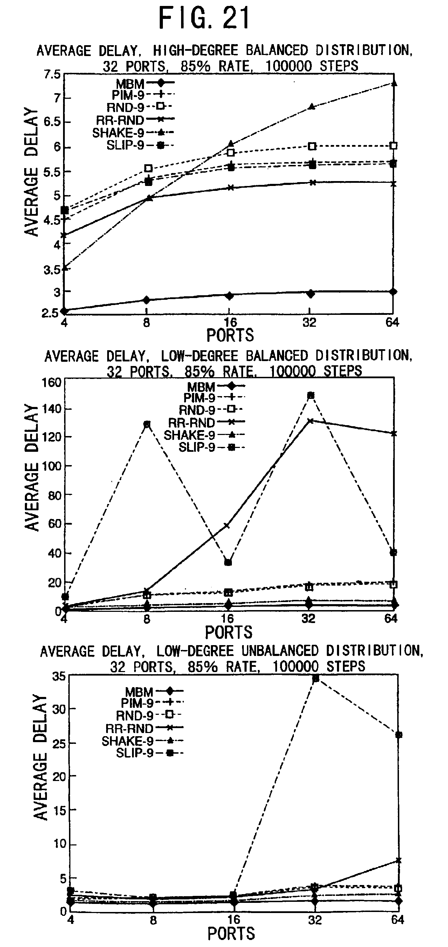

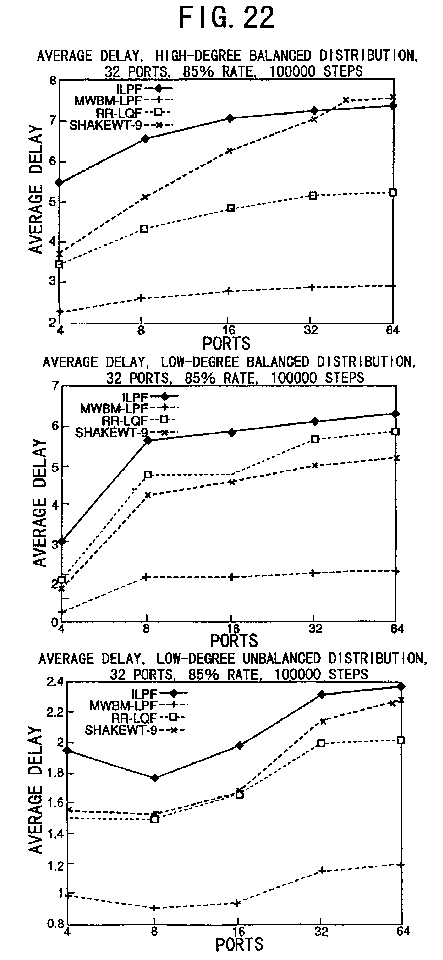

In the second case, the experimental space consists of all possible values of the tuple (A, s = 9, r = 85%, p, flow type) where p denotes number of ports. The axes show average delay and number of ports. For p = 4, 8,16, 32, 64. Figures 21 and 22 are tested and the results for unweighted- and weighted-type methods are presented respectively. The results demonstrate that most of the methods scale reasonably well, i.e. the average delay increases very slowly as the number of ports grows. There are some exceptions though. The average delay for RR-RND in Fig. 21 increases sharply with the number of ports for low-degree balanced flows. RR-RND is by definition a very rigid method in the way it prioritizes input ports. As the number of ports increases, this inflexibility incurs a higher overhead. The average delay for SLIP in Figure 21 fluctuates between 30 and 140 for low-degree balanced and between 3 and 26 for unbalanced inputs. SLIP's behavior is hard to predict a priori due to the different priority wheels maintained by each port. If these wheels are aligned the wrong way - an event which apparently occurs on the same traffic type simply as N grows - SLIP's performance suffers. The variation in average delay for the weighted-type methods in Fig. 22 is bounded by 5; therefore these methods scale in a satisfactory manner.

Other modifications and variations to the invention will be apparent to those skilled in the ad from the foregoing disclosure and teachings. Thus, while only certain embodiments of the invention have been specifically described herein, it will be apparent that numerous modifications may be made thereto without departing from the spirit and scope of the invention.

**Claims**

**1.** A computer-implemented unweighted queuing method for a system with M groups of N input queues each of said N input queues requesting a unique one of N services, wherein M and N are natural numbers, characterized by the steps of:

a)(23.1) representing each of said M group as a node in a first set of vertices of a bipadite graph;

b)(23.2) representing each of said N services as a node in a second set of vertices of said bipartite graph;

c)(23.3) representing each non-empty queue as an edge between a vertex in said first set corresponding to one of said M groups to which said each non-empty queue belongs to and a vertex in said second set corresponding to a service requested by said each non-empty queue;

d)(23.4) performing an initial matching by finding a subset of edges such that no vertex is incident to more than one edge in such subset;

e) (23.6-23.11) performing an unweighted shakeup matching for a hitherto unmatched vertex x in said first set to a vertex y in the second set by performing an appropriate one of following two steps, wherein if x matches with more than one of said vertices in the second set, vertex y being selected at random:

e-1)(23.9) adding new matching (x,y) if y is not part of any previous matching; and

e-2)(23.11) replacing a matching involving y by a matching (x,y) if y is already part of a matching (z,y), wherein z is a vertex in said first set; and

f)(23.5, 23.10) repeating step (e) for each unmatched vertex in said first set.

2. A computer-implemented weighted queuing method for a system with M groups of N input queues each of said N input queues requesting a unique one of N services, wherein M and N are natural numbers, characterized by the steps of:

a)(24.1) representing each of said M groups as a node in a first set of vertices of a bipartite graph;

b)(24.2) representing each of said N services as a node in a second set of vertices of said bipartite graph;

c)(24.3) representing each non-empty queue as an edge between a vertex in said first set corresponding to one of said M groups to which said each non-empty queue belongs to and a vertex in said second set corresponding to a service requested by said each non-empty queue;

d)(24.4) performing an initial matching by finding a subset of edges such that no vertex is incident to more than one edge in such subset, wherein if a vertex can be matched using more than one edges, one edge is selected from said more than one edges with a probability relative to the size of queues associated with each of said one or more edges;

e)(24.6-24.11) performing a weighted shakeup matching by performing an appropriate one of following two steps for a hitherto unmatched vertex x in said first set to a vertex y in the second set:

e-1)(24.7) if y is not part of any previous matching, said vertex y being selected with a probability:

$$\frac{q_{xy}}{\displaystyle\sum_{k=1}^{N} q_{xk}}$$

wherein $q_{xy}$ is a length of a queue between vertices x and Y;

e-2)(24.11) replacing a matching involving y by a matching (x,y) if y is already part of a matching (z,y), said replacement being done with a probability:

$$\frac{q_{xy}}{q_{xy} + q_{zy}}$$

wherein z is a vertex in said first set; and

f)(24.5, 24.10) repeating step (e) for each unmatched vertex in said first set.

3. A method of unweighted routing in a switch comprising input ports and output ports, having cells to route between said input ports and said output ports, each input port having one queue each for each said output port, thereby each input port having as many queues as a number of said output ports, characterized by the steps of:

a) representing each said input pods as a node in a first set of vertices of a bipartite graph;

b) representing each said output ports as a node in a second set of vertices of said bipartite graph;

c) representing each non-empty queue between any of said input ports and any of said output ports as an edge between a vertex in said first set corresponding to said any of said input ports and a vertex in said second set corresponding to said any of said output ports, thereby creating a set of edges;

d) performing an initial matching by finding a subset of edges such that no vertex is incident to more than one edge in said subset;

e) performing an unweighted shakeup matching for a hitherto unmatched vertex x in said first set to a vertex y in the second set by performing an appropriate one of the following two steps, wherein if x matches with more than one of said vertices in the second set, vertex y being selected at random:

e-1) adding new matching (x,y) if y is not part of any previous matching;

e-2) replacing a matching involving y by a matching (x,y) if y is already part of a matching (z,y) wherein z is a vertex in said first set; and

f) repeating step (e) for each unmatched vertex in said first set.

4. A method of weighted routing in a switch comprising input ports and output ports, having cells to route between said input ports and said output ports, each input port having one queue each for each said output port, thereby each input port having as many queues as a number of said output ports, characterized by the steps of:

a) representing each said input ports as a node in a first set of vertices of a bipartite graph;

b ) representing each said output ports as a node in a second set of vertices of said bipartite graph;

c) representing each non-empty queue between any of said input ports and any of said output ports as an edge between a vertex in said first set corresponding to said any of said input ports and a vertex in said second set corresponding to said any of said output ports, thereby creating a set of edges;

d) performing an initial matching by finding a subset of edges such that no vertex is incident to more than one edge in such subset, wherein if a vertex can be matched using more than one edges, one edge is selected from said more than one edges with a probability relative to a size of a queue associated with each of said one or more edges;

e) performing a weighted shakeup matching by performing an appropriate one of following two steps for a hitherto unmatched vertex x in said first set to a vertex y in the second set:

e-1) if y is not part of any previous matching, said vertex y being selected with a probability:

$$\frac{q_{xy}}{\displaystyle\sum_{k=1}^{N} q_{xk}}$$

wherein $q_{xy}$ is a length of a queue between vertices x and Y;

e-2) replacing a matching involving y by a matching (x,y) if y is already part of a matching (z,y), said replacement being done with a probability:

$$\frac{q_{xy}}{q_{xy} + q_{zy}}$$

wherein z is a vertex in said first set; and

f ) repeating step (e) for each unmatched vertex in said first set.

5. The method of claim 3 wherein said unweighted shakeup is performed for every alternate matching.

6. The method of claim 4 wherein said weighted shakeup is performed for every alternate matching.

7. The method of claim 3 wherein said unweighted shakeup is performed only if no increase in the size of matching is possible without shakeup.

8. The method of claim 4 wherein said weighted shakeup is performed only if no increase in the size of matching is possible without shakeup.

9. An unweighted shakeup switch for use in a network, said switch comprising:

input ports (25.11-25.14);
output ports(25.51-25.54), wherein cells are routed between said input ports and said output ports; and
an unweighted scheduler,

wherein said unweighted scheduler further comprises:

a graph generator (25.2) that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set;
a matcher (25.3) for performing an initial matching by finding a subset of edges such that no vertex is incident to more than one edge in such subset;
an unweighted shakeup matcher (25.4) for performing an unweighted shakeup matching for a hitherto unmatched vertex x in said first set to a vertex y in the second set, wherein said unweighted shakeup matcher adds new matching (x,y) if y is not part of any previous matching and replaces a matching involving y by a matching (x,y) if y is already part of a matching (z,y).

10. A weighted shakeup switch for use in a network, said switch comprising:

input ports (26.11-26.14);
output ports (26.51-26.54), wherein cells are routed between said input ports and said output ports; and
a weighted scheduler,

wherein said weighted scheduler further comprises:

a graph generator (26.2) that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set;
a matcher (26.3) for performing an initial matching by finding a subset of edges such that no vertex is incident to more than one edge in such subset;
a weighted shakeup matcher (26.4) for performing a weighted shakeup matching for a hitherto unmatched vertex x in said first set to a vertex y in the second set, wherein said weighted shakeup matcher adds (x,y) if y is not part of any previous matching, said vertex y being selected with a probability:

$$\frac{q_{xy}}{\sum_{k=1}^{N} q_{xk}}$$

wherein $q_{xy}$ is a length of a queue between vertices x and y, and replaces a matching involving y by a matching (x,y) if y is already part of a matching (z,y), said replacement being done with a probability:

$$\frac{q_{xy}}{q_{xy} + q_{zy}}$$

11. The switch of claim 9 wherein said unweighted shakeup is performed for every alternate matching.

**12.** The switch of claim 10 wherein said weighted shakeup is performed for every alternate matching.

**13.** The switch of claim 9 wherein said unweighted shakeup is performed only if no increase in the size of matching is possible without shakeup.

**14.** The switch of claim 10 wherein said weighted shakeup is performed only if no increase in the size of matching is possible without shakeup.

**15.** A network system comprising a plurality of switches for routing messages, a first subset of the plurality of said switches being unweighted shakeup switches, a second subset of the plurality of said switches being weighted shakeup switches,

each of the unweighted shakeup switches comprising: input ports (25.11-25.14); output ports(25.51-25.54), wherein cells are routed between said input ports and said output ports; and an unweighted scheduler, wherein said unweighted scheduler further comprises:
a graph generator (25.2) that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set;
a matcher (25.3) for performing an initial matching by finding a subset of edges such that no vertex is incident to more than one edge in such subset; and
an unweighted shakeup matcher (25.4) for performing an unweighted shakeup matching for a hitherto unmatched vertex x in said first set to a vertex y in the second set, wherein said unweighted shakeup matcher adds new matching (x,y) if y is not part of any previous matching and replaces a matching involving y by a matching (x,y) if y is already part of a matching (z,y), and
each of the weighted shakeup switches comprising: input ports (26.11-26.14); output ports (26.51-26.54), wherein cells are routed between said input ports and said output ports; and a weighted scheduler, wherein said weighted scheduler further comprises:
a graph generator (26.2) that generates a bipartite graph with each said input ports as a node in a first set of vertices of the bipartite graph and each said output ports is a node in a second set of vertices of said bipartite graph and a cell to be routed between an input port and an output port is an edge between a vertex in said first set said second set;
a matcher (26.3) for performing an initial matching by finding a subset of edges such that no vertex is incident to more than one edge in such subset; and
a weighted shakeup matcher (26.4) for performing a weighted shakeup matching for a hitherto unmatched vertex x in said first set to a vertex y in the second set, wherein said weighted shakeup matcher adds (x,y) if y is not part of any previous matching, said vertex y being selected with a probability:

$$\frac{q_{xy}}{\displaystyle\sum_{k=1}^{N} q_{xk}}$$

wherein $q_{xy}$ is a length of a queue between vertices x and y, and replaces a matching involving y by a matching (x,y) if y is already part of a matching (z,y), said replacement being done with a probability:

$$\frac{q_{xy}}{q_{xy} + q_{zy}}$$

# FIG. 1
## BIPARTITE GRAPH

# FIG. 2

INPUT PORTS          OUTPUT PORTS

CROSSBAR SWITCH
AND
SCHEDULER

# FIG. 3

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 4

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 5

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 6

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 7

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 8

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 9

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# FIG. 10

STABLE RATES, HIGH-DEGREE BALANCED DISTRIBUTION, 32 PORTS

STABLE RATES, LOW-DEGREE BALANCED DISTRIBUTION, 32 PORTS

STABLE RATES, LOW-DEGREE UNBALANCED DISTRIBUTION, 32 PORTS

# F I G. 11

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

28

# FIG. 12

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

# FIG. 13

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

## FIG. 14

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

31

# FIG. 15

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

# FIG. 16

AVERAGE DELAY, HIGH-DEGREE BALANCED DISTRIBUTION, 32 PORTS, 85% RATE, 100000 STEPS

AVERAGE DELAY, LOW-DEGREE BALANCED DISTRIBUTION, 32 PORTS, 85% RATE, 100000 STEPS

AVERAGE DELAY, LOW-DEGREE UNBALANCED DISTRIBUTION, 32 PORTS, 85% RATE, 100000 STEPS

## FIG. 17

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

# FIG. 18

AVERAGE DELAY, HIGH-DEGREE BALANCED DISTRIBUTION, 32 PORTS, 85% RATE, 100000 STEPS

AVERAGE DELAY, LOW-DEGREE BALANCED DISTRIBUTION, 32 PORTS, 85% RATE, 100000 STEPS

AVERAGE DELAY, LOW-DEGREE UNBALANCED DISTRIBUTION, 32 PORTS, 85% RATE, 100000 STEPS

# FIG. 19

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

# FIG. 20

AVERAGE DELAY, HIGH-DEGREE BALANCED DISTRIBUTION, 32 PORTS, 85% RATE, 100000 STEPS

AVERAGE DELAY, LOW-DEGREE BALANCED DISTRIBUTION, 32 PORTS, 85% RATE, 100000 STEPS

AVERAGE DELAY, LOW-DEGREE UNBALANCED DISTRIBUTION, 32 PORTS, 85% RATE, 100000 STEPS

# F I G. 21

AVERAGE DELAY, HIGH-DEGREE BALANCED DISTRIBUTION, 32 PORTS, 85% RATE, 100000 STEPS

AVERAGE DELAY, LOW-DEGREE BALANCED DISTRIBUTION, 32 PORTS, 85% RATE, 100000 STEPS

AVERAGE DELAY, LOW-DEGREE UNBALANCED DISTRIBUTION, 32 PORTS, 85% RATE, 100000 STEPS

# FIG. 22

AVERAGE DELAY, HIGH-DEGREE BALANCED DISTRIBUTION,
32 PORTS, 85% RATE, 100000 STEPS

AVERAGE DELAY, LOW-DEGREE BALANCED DISTRIBUTION,
32 PORTS, 85% RATE, 100000 STEPS

AVERAGE DELAY, LOW-DEGREE UNBALANCED DISTRIBUTION,
32 PORTS, 85% RATE, 100000 STEPS

# FIG. 23

```
                    ┌────────────────────────────┐
                    │ REPRESENT INPUT PORTS AS   │ ╮ 23.1
                    │ FIRST SET OF VERTICES IN   │
                    │ A BIPARTITE GRAPH          │
                    └────────────────────────────┘
                    ┌────────────────────────────┐
                    │ REPRESENT OUTPUT PORTS AS  │ ╮ 23.2
                    │ SECOND SET OF VERTICES IN  │
                    │ THE BIPARTITE GRAPH        │
                    └────────────────────────────┘
                    ┌────────────────────────────┐
                    │ REPRESENT NON-EMPTY        │
                    │ QUEUES AS EDGES BETWEEN    │ ╮ 23.3
                    │ THE FIRST SET OF VERTICES  │
                    │ AND THE SECOND SET OF      │
                    │ VERTICES                   │
                    └────────────────────────────┘
```

PERFORM INITIAL MATCHING BY FINDING SUBSET OF EDGES SUCH THAT NO VERTEX IS INCIDENT TO MORE THAN ONE EDGE IN THE SUBSET — 23.4

23.12

ARE THERE MORE UNVISITED AND UNMATCHED VERTICES IN THE FIRST SET — 23.5

NO → STOP

YES

SELECT AN UNVISITED AND UNMATCHED VERTEX x. MARK x AS VISITED — 23.6

PICK ONE VERTEX y AT RANDOM FROM AMONG THE VERTICES THAT CAN BE MATCHED WITH THE SELECTED UNMATCHED VERTEX AND CALL THIS MATCHING (x, y) — 23.7

IS THE PICKED VERTEX ALREADY MATCHED WITH A MATCHING (z, y) — 23.8

YES

NO — 23.9

ADD NEW MATCHING (x, y) — 23.9

REPLACE (z, y) WITH (x, y) — 23.11

CONTINUE — 23.10

# FIG. 24

REPRESENT INPUT PORTS AS FIRST SET OF VERTICES IN A BIPARTITE GRAPH — 24.1

REPRESENT OUTPUT PORTS AS SECOND SET OF VERTICES IN THE BIPARTITE GRAPH — 24.2

REPRESENT NON-EMPTY QUEUES AS EDGES BETWEEN THE FIRST SET OF VERTICES AND THE SECOND SET OF VERTICES — 24.3

PERFORM INITIAL MATCHING BY FINDING SUBSET OF EDGES SUCH THAT NO VERTEX IS INCIDENT TO MORE THAN ONE EDGE IN THE SUBSET — 24.4

ARE THERE MORE UNVISITED AND UNMATCHED VERTICES IN THE FIRST SET — 24.5

NO → STOP — 24.12

YES

SELECT AN UNVISITED AND UNMATCHED VERTEX x. MARK x AS VISITED — 24.6

PICK ONE VERTEX y FROM AMONG THE VERTICES THAT CAN BE MATCHED WITH THE SELECTED UNMATCHED VERTEX AND CALL THIS MATCHING (x, y). THE PICKING BEING DONE ON A PROBABILITY — 24.7

$$q_{xy} / \sum_{k=1}^{N} q_{xk}$$

IS THE PICKED VERTEX ALREADY MATCHED WITH A MATCHING (z, y) — 24.8

YES → REPLACE (z, y) WITH (x, y). THE REPLACEMENT BEING DONE WITH A PROBABILITY $q_{xy} / (q_{xy} + q_{zy})$ — 24.11

NO — 24.9

ADD NEW MATCHING (x, y)

CONTINUE — 24.10

# FIG. 25

EP 1 049 352 A2

25.11

25.12

25.13

25.14

GRAPH GENERATOR — 25.2

MATCHER — 25.3

UNWEIGHTED
SHAKEUP MATCHER — 25.4

25.51

25.52

25.53

25.54

# FIG. 26

26.11

26.12

26.13

26.14

GRAPH  GENERATOR — 26.2

MATCHER — 26.3

WEIGHTED  SHAKEUP
MATCHER — 26.4

26.51

26.52

26.53

26.54

EP 1 049 352 A2

43

FIG. 27